# EUROPEAN PATENT APPLICATION

(11) **EP 4 822 141 A1**
(43) Date of publication of application: **14.10.2026**
(21) Application number: 26170954.7
(22) Date of filing: 07.04.2026
(51) Int. Cl.: F01D 5/18

(54) **TURBINE ENGINE HAVING AN AIRFOIL WITH A TURBULATOR**

(30) Priority: 04.04.2025 US 202563783301 P
(71) Applicant: General Electric Company, Cincinnati, Ohio 45215 (US)
(72) Inventor: CRAIG, Charles William, Evendale, 45241 (US); WEBSTER, Zachary Daniel, West Chester, 45069 (US); LEDEZMA, Gustavo Adolfo, Niskayuna, 12309 (US); SMITH, Matthew Alan, Evendale, 45241 (US); CALHOUN, John Curtis, West Chester, 45069 (US); OSGOOD, Daniel Endecott, West Chester, 45069 (US); GALLIER, Kirk Douglas, West Chester, 45069 (US)
(74) Representative: Openshaw & Co.

(57) **Abstract**

A turbine engine having an engine core extending along an engine centerline. An engine component includes an internal cooling passage defined by an inner surface and a turbulator located within the internal cooling passage. The turbulator includes a front face, an upstream face, a downstream face, a first top face, and a second top face. The turbulator is curved to define a turbulator nose having a radius of curvature greater than zero. The engine component also includes a cavity width, a turbulator length, and a cavity aspect ratio

## Description

### CROSS-REFERENCE TO RELATED APPLICATION

This patent claims the benefit of U.S. Provisional Patent Application No. 63/783,301, which was filed on April 4, 2025. U.S. Provisional Patent Application No. 63/783,301 is hereby incorporated herein by reference in its entirety. Priority to U.S. Provisional Patent Application No. 63/783,301 is hereby claimed.

### TECHNICAL FIELD

The present subject matter relates generally to a component for a turbine engine, and more specifically to an airfoil for the turbine engine with a set of cooling conduits located within.

### BACKGROUND

A gas turbine engine typically includes a turbomachine, with a fan in some implementations. The turbomachine generally includes a compressor, combustor, and turbine in serial flow arrangement. The compressor compresses air which is channeled to the combustor where it is mixed with fuel. The mixture is then ignited for generating hot combustion gases. The combustion gases are channeled to the turbine, which extracts energy from the combustion gases for powering the compressor and fan, if used, as well as for producing useful work to propel an aircraft in flight or to power a load, such as an electrical generator.

### BRIEF DESCRIPTION OF THE DRAWINGS

A full and enabling disclosure of the present disclosure, including the best mode thereof, directed to one of ordinary skill in the art, is set forth in the specification, which makes reference to the appended figures, in which:
FIG. 1 is a schematic view of a gas turbine engine, in accordance with aspects of the present disclosure.
FIG. 2 is a perspective view of an engine component for use in the gas turbine engine of FIG. 1, in accordance with aspects of the present disclosure.
FIG. 3 is a perspective cross-sectional view of a portion of the engine component taken along line III-III of FIG. 2 in accordance with aspects of the present disclosure.
FIG. 4 is a top cross-sectional view of the engine component of FIG. 3 in accordance with aspects of the present disclosure.
FIG. 5 is a cross-sectional view of a turbulator of the engine component taken along line V-V of FIG. 4 in accordance with aspects of the present disclosure.
FIG. 6 is a cross-sectional view of the turbulator taken along line VI-VI of FIG. 5.
FIG. 7 is a cross-sectional view of a turbulator for use in an engine component within the gas turbine engine of FIG. 1, in accordance with aspects of the present disclosure.
FIG. 8 is a cross-sectional view of the turbulator taken along line VIII-VIII of FIG. 7.

### DETAILED DESCRIPTION

During operation of the gas turbine engine, various systems generate a relatively large amount of heat and stress. For example, a substantial amount of heat or stress can be generated during operation of thrust generating systems, lubrication systems, electric motors and/or generators, hydraulic systems, and/or other systems of the gas turbine engine. A design that mitigates heat loads and/or stresses on an engine component is advantageous.

Reference will now be made in detail to present embodiments of the disclosure, one or more examples of which are illustrated in the accompanying drawings. The detailed description uses numerical and letter designations to refer to features in the drawings. Like or similar designations in the drawings and description have been used to refer to like or similar parts of the disclosure.

All directional references (e.g., radial, axial, proximal, distal, upper, lower, upward, downward, left, right, lateral, front, back, top, bottom, above, below, vertical, horizontal, clockwise, counterclockwise, upstream, downstream, forward, aft, etc.) are only used for identification purposes to aid the reader's understanding of the present disclosure, and do not create limitations, particularly as to the position, orientation, or use of aspects of the disclosure described herein.

Connection references (e.g., attached, coupled, connected, and joined) are to be construed broadly and can include intermediate structural elements between a collection of elements and relative movement between elements unless otherwise indicated. As such, connection references do not necessarily infer those two elements are directly connected and in fixed relation to one another. The exemplary drawings are for purposes of illustration only, and the dimensions, positions, order and relative sizes reflected in the drawings attached hereto can vary. That is, aspects of the drawings are not scaled, and elements are often exaggerated to ease description and explanation.

Aspects of the disclosure generally relate to an engine component, such as an airfoil or a blade assembly including an airfoil, for a turbine engine. The engine component (e.g., airfoil) includes an internal cooling passage. The internal cooling passage routes cooling fluid through the airfoil to help reduce the temperature of the airfoil. The internal passage includes one or more cooling features, such as a turbulator, which is a ridge or protrusion on an inner surface of the airfoil to enhance convective cooling in the internal cooling passage or cavity. More specifically, a chevron shaped turbulator is located within the internal cooling passage. The turbulator disrupts the airflow in the internal cooling passage to improve heat extraction from the airfoil or other engine component by the airflow. A "nose" of the turbulator is a most upstream curved portion on an upstream face of the turbulator. The nose of the turbulator can be a sharp "V' shape or a rounded, curved shape, for example.

As used herein, a "stage" of either a compressor or a turbine of the turbine engine is a set of blade assemblies and an adjacent set of vane assemblies, with both sets of the blade assemblies and the vane assemblies circumferentially arranged about the engine centerline. A pair of circumferentially-adjacent vanes in the set of vanes are referred to as a nozzle. The rotation of the blades creates a flow of air through the vanes/nozzles. The number of blade assemblies and the number of nozzles for a stage are both selected to control flow across each blade and through the nozzles.

As used herein, the word "exemplary" means "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

As used herein, the terms "first", "second", "third", and "fourth" can be used interchangeably to distinguish one component from another and are not intended to signify location or importance of the individual components.

As used herein, a "set" or a set of elements can include any number of said elements, including one.

As used herein, the term "fore" or "forward" means in front of something and "aft" or "rearward" means behind something. For example, when used in terms of fluid flow, fore/forward can mean upstream and aft/rearward can mean downstream.

As used herein, the terms "upstream" and "downstream" refer to the relative direction with respect to a flow in a pathway. For example, with respect to a fluid flow, "upstream" refers to the direction from which the fluid flows, and "downstream" refers to the direction to which the fluid flows. As used herein, while an engine component, such as an airfoil, is described in both installed and uninstalled conditions, upstream and downstream can be used in both conditions to reflect how fluid would flow when the airfoil is installed in the engine.

As used herein, the term "fluid" refers to a gas, liquid, or multi-phase and the term "fluidly coupled" or in "fluid communication" means that a fluid is capable of making the connection between the areas specified.

As used herein, forms "a", "an", and "the" include plural references unless the context clearly dictates otherwise.

A "rotational axis" (denoted *"X")* refers to an axis about which parts of the gas turbine engine rotate and is aligned with the engine centerline.

As used herein, "axial" or "axially" or "axial direction" refers to a parallel dimension or direction with respect to the rotational axis *X*.

A radial axis (denoted *"RA")* extends perpendicular to and radially from the rotational axis *X*.

As used herein, "radial" or "radially" or "radial direction" refers to a perpendicular dimension or direction with respect to the engine centerline and parallel to the radial axis *RA.*

As used herein, "circumferential" or "circumferentially" or "circumferential direction" refers to a dimension or direction perpendicular to both the axial and radial directions and circumscribing the rotational axis.

As used herein, the term "chordwise" refers to a dimension or direction which extends between and intersects the leading edge and the trailing edge of an airfoil. The airfoil further includes a pressure side and a suction side extending between the leading edge and the trailing edge. A chordwise direction (denoted "Cd") is parallel to or follows a camber line, wherein the term "camber line" refers to an imaginary or virtual line which lies halfway between the pressure side and the suction side and intersects the leading edge and the trailing edge of the airfoil.

The airfoil includes an internal cooling passage defined by an inner surface. The internal cooling passage can include a passage centerline (denoted "PC"), which is an imaginary or virtual line extending from an inlet to an outlet of the internal cooling passage. The passage centerline PC of the internal cooling passage can be in the radial direction defined by the radial axis *RA,* the axial direction defined by the rotational axis *X,* a circumferential direction (denoted *"CirF")* or any combination thereof. The passage centerline PC of the internal cooling passage can generally be in the same direction as at least a portion of a cooling fluid (herein denoted "CF") provided to the internal cooling passage.

A first dimension or cavity width (denoted "A") is a distance measured across the internal cooling passage formed between portions of the inner surface of the internal cooling passage that extend through an interior of the airfoil between the pressure side of the airfoil (a first side) and the suction side of the airfoil (a second side), where the cavity width A is measured in the chordwise direction Cd. The cavity width A is a distance measurement across the internal cooling passage along the camber line measured in a virtual or reference plane defined by the turbulator nose and extending in the cavity between the first side and the second side.

A second dimension or cavity height (denoted "B") is a distance measured across the internal cooling passage defined by the inner surface between the first side (pressure side) of the inner surface and the second side (suction side) of the inner surface. The cavity height B is a distance measurement taken from the first portion of the inner surface to the second portion of the inner surface along a line intersecting the tip of the turbulator nose and perpendicular to the chordwise direction Cd measured in the reference plane defined by the tip of the turbulator nose.

A turbulator length (denoted *"TL")* is defined as a distance measured from an intersection of a first top face of the turbulator and an upstream face of the turbulator at the inner surface of the internal cooling passage to an intersection of the second top face of the turbulator and the upstream face at the inner surface the turbulator in a virtual reference plane extending between the first top face and the second top face. The turbulator length TL can be equal to or less than the cavity width A. As used herein, the upstream face of the turbulator faces an entrance to the dovetail of a blade assembly in which the airfoil is mounted, and the downstream face of the turbulator faces the downstream direction through which cooling fluid (e.g., air) will leave the internal cooling passage and exit the airfoil.

A cavity aspect ratio (denoted *"C")* is determined by a ratio of the cavity height B to the cavity width A (C = B/A).

A turbulator nose radius (denoted "*R*") is defined as a radius of curvature of the turbulator nose measured along the upstream face of the turbulator.

A turbulator height (denoted "*e*") is defined as a greatest (i.e., maximum) distance measured from the first portion of the inner surface to a front surface of the turbulator.

An upstream draft angle (denoted "α₁") is measured from inside the upstream face of the turbulator to the inner surface of the cavity on which the turbulator is arranged.

A downstream draft angle (denoted "α₂") is measured from the downstream face of the turbulator to the inner surface of the cavity on which the turbulator is arranged.

In certain exemplary embodiments of the present disclosure, a gas turbine engine defining an engine centerline and a circumferential direction is provided. The gas turbine engine generally includes a rotor assembly and a stator assembly. The rotor assembly and the stator assembly collectively define a substantially annular flow path through the gas turbine engine.

Stress and high temperature can cause creep and fatigue in the components of the gas turbine engine. Due to the engine effects, the creep, fatigue, or combination thereof in specific areas of the components increases as the engine continues to operate. Creep and fatigue may result in unintended engine removals that limit engine Time on Wing (TOW). As used herein, the term "creep" is used to describe a time-dependent change in a solid material's stress and deformation that occurs when the solid material experiences a constant external force.

Components of the engine, such as airfoils, with at least one cavity for which internal heat extraction from the component is a priority include internal cooling augmentation within the cavity. The components (i.e., airfoils) having the at least one cavity for which internal heat extraction require efficient cooling to ensure the durability of the components.

The standard practice for solving the problem of removing heat from the component through internal heat transfer is the addition of lattices across cavities in the component, where a cooling airflow is provided to the lattice. Alternatively, turbulators with discrete linear or arced pieces are included on the cavity walls and extend into the internal cooling airflow.

Such a lattice structure adds significant weight to the component and decreases the pressure of the internal cooling airflow through the cavity when compared to the turbulators formed by discrete linear or arced pieces. However, such turbulators have a lesser impact on pressure as compared to the lattice, resulting in a relatively lesser internal heat transfer. Further, the addition of lattice or turbulator structures within the cavity can increase accumulation of particles (e.g., dust). Accumulation of dust within the cavity of the airfoil or other similar component negatively impacts cooling of the airfoil,

Therefore, a turbulator design solution is needed that results in a higher performing internal heat transfer augmentation that minimizes air pressure drop of the cooling fluid CF passing through the internal cooling passage. Aspects of the design also eliminate or reduce the accumulation of particles in the cavity from the internal cooling airflow. Further, aspects of the design should reduce the weight of the component when compared to traditional designs.

The inventors' practice has proceeded in the manner of designing engine components with turbulators coupled to the wall of an internal cavity and evaluating different turbulator designs based on the geometry of the turbulator.

The inventors determined that it is beneficial to form the turbulators in the shape of a chevron with a curved nose having a turbulator nose radius *R*. That is, the turbulator nose, which is the most upstream portion of the chevron-shaped turbulator, is curved.

The inventors also determined that the turbulator nose radius *R* interacts with a turbulator height e and a cavity aspect ratio *C*. In other words, the relationship between the cavity aspect ratio *C*, the turbulator height *e*, and the turbulator nose radius *R* of chevron-shape turbulator, when designed to be within a specific range, provides a desired augmentation or improvement of heat transfer between the turbulator and airflow in the internal cavity while providing a lower air pressure drop of the cooling fluid passing CF through the internal cooling passage than traditional designs.

The inventors, noting the weight benefit of the turbulator design over a lattice structure, created optimal geometries of the turbulator. The inventors created turbulator designs to operate within an airfoil for a turbine engine that augment heat transfer while also eliminating or reducing particle accumulation.

The inventors created a limited, novel set of airfoil designs including an internal cooling passage or cavity having a turbulator with a particular geometry that enables an engine architecture to satisfy mission requirements, such requirements including optimal internal heat transfer augmentation, while eliminating or reducing particle accumulation as determined by the turbulator geometry that includes the cavity aspect ratio *C*, the turbulator height e, and the nose radius *R*.

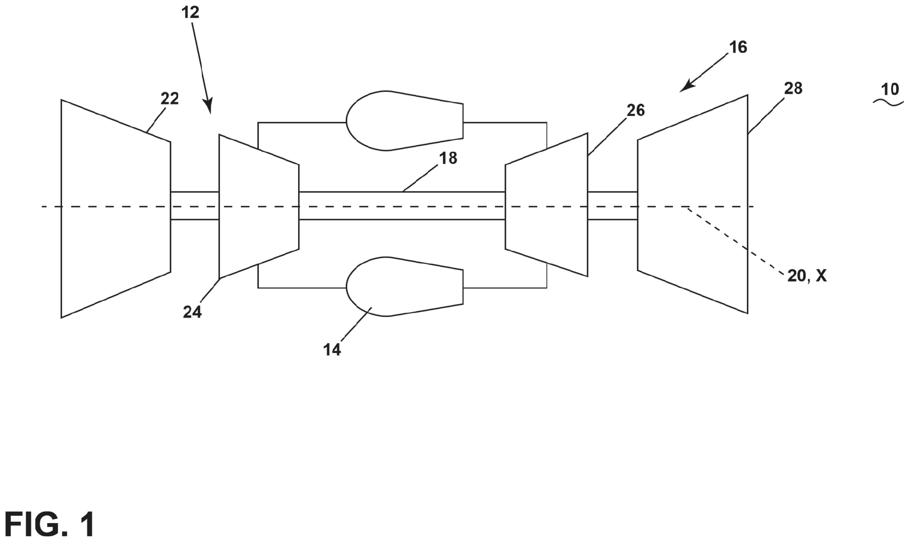

Referring now to the drawings, FIG. 1 is a schematic view of a turbine engine 10. As a non-limiting example, the turbine engine 10 can be used within an aircraft. The turbine engine 10 includes an engine core. The engine core includes a compressor section 12, a combustor 14, and a turbine section 16 in serial flow arrangement.

A fan (not shown) provides air to the compressor section 12. A drive shaft 18 rotationally couples the fan, compressor section 12, and turbine section 16, such that rotation of one affects the rotation of the others, and defines a rotational axis *X* or engine centerline 20 for the turbine engine 10.

The compressor section 12 includes a low-pressure (LP) compressor 22 and a high-pressure (HP) compressor 24 serially fluidly coupled to one another. The turbine section 16 includes an HP turbine 26 and a LP turbine 28 serially fluidly coupled to one another. The drive shaft 18 operatively couples the LP compressor 22, the HP compressor 24, the HP turbine 26 and the LP turbine 28 together. In some implementations, the drive shaft 18 includes an LP spool (not illustrated) and an HP spool (not illustrated), where the LP spool couples the LP compressor 22 to the LP turbine 28, and the HP spool couples the HP compressor 24 to the HP turbine 26.

The compressor section 12 includes a plurality of axially spaced stages. Each stage includes a set of circumferentially spaced rotating blades and a set of circumferentially-spaced stationary vanes. In one configuration, the compressor blades for a stage of the compressor section 12 are mounted to a disk, which is mounted to the drive shaft 18. Each set of blades for a given stage can have its own disk. In one implementation, the vanes of the compressor section 12 are mounted to a casing which extends circumferentially about the turbine engine 10. In a counter-rotating turbine engine, the vanes are mounted to a drum, which is similar to the casing, except the drum rotates in a direction opposite the blades, whereas the casing is stationary. It will be appreciated that the representation of the compressor section 12 is merely schematic. The number of stages can vary.

Similar to the compressor section 12, the turbine section 16 includes a plurality of axially spaced stages, with each stage having a set of circumferentially spaced, rotating blades and a set of circumferentially-spaced, stationary vanes. In one configuration, the turbine blades for a stage of the turbine section 16 are mounted to a disk which is mounted to the drive shaft 18. Each set of blades for a given stage can have its own disk. In one implementation, the vanes of the turbine section are mounted to the casing in a circumferential manner. In a counter-rotating turbine engine, the vanes can be mounted to a drum, which is similar to the casing, except the drum rotates in a direction opposite the blades, whereas the casing is stationary. The number of blades, vanes and turbine stages can vary.

The combustor 14 is provided serially between the compressor section 12 and the turbine section 16. The combustor 14 is fluidly coupled to at least a portion of the compressor section 12 and the turbine section 16 such that the combustor 14 at least partially fluidly couples the compressor section 12 to the turbine section 16. As a non-limiting example, the combustor 14 is fluidly coupled to the HP compressor 24 at an upstream end of the combustor 14 and to the HP turbine 26 at a downstream end of the combustor 14.

During operation of the turbine engine 10, ambient or atmospheric air is drawn into the compressor section 12 via the fan, upstream of the compressor section 12, where the air is compressed defining a pressurized air. The pressurized air then flows into the combustor 14 where the pressurized air is mixed with fuel and ignited, thereby generating combustion gases. Some work is extracted from these combustion gases by the HP turbine 26, which drives the HP compressor 24. The combustion gases are discharged into the LP turbine 28, which extracts additional work to drive the LP compressor 22, and the exhaust gas is ultimately discharged from the turbine engine 10 via an exhaust section (not illustrated) downstream of the turbine section 16. The driving of the LP turbine 28 drives the LP spool to rotate the fan and the LP compressor 22. The pressurized airflow and the combustion gases together define a working airflow that flows through the fan, compressor section 12, combustor 14, and turbine section 16 of the turbine engine 10.

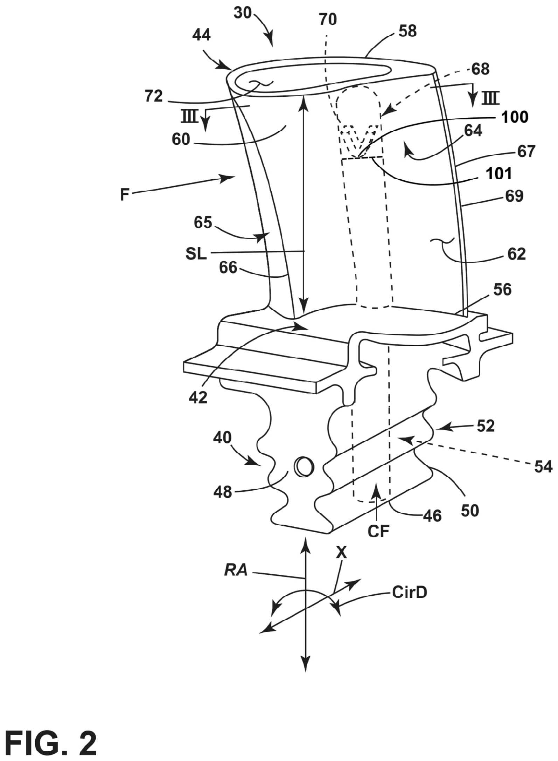

FIG. 2 is a perspective view of a component for a turbine engine 10 (FIG. 1) with an internal cooling passage 68. The component is illustrated, by way of example, as a single blade assembly 30 for the turbine engine 10 (FIG. 1). The blade assembly 30 includes a shank 40, a platform 42, and an airfoil 44 extending from the platform 42.

A cartesian coordinate system illustrating an axial direction, a radial direction, and a circumferential direction is included in FIG. 2 to aid in the reader's orientation of the blade assembly 30 within the turbine engine 10 of FIG. 1. The rotational axis *X* extends axially in a direction extending between forward and aft defining an axial direction. The rotational axis *X* can be arranged along the engine centerline 20 of FIG. 1. The radial axis *RA* extends perpendicular to the rotational axis *X* and radially from the engine centerline 20. The circumferential direction *CirF* extends perpendicular to the radial axis *RA* and circumscribes the rotational axis *X.*

The shank 40 extends between a base 46 and the platform 42 in the radial direction parallel to the radial axis *RA.* The shank 40 extends between a shank forward surface 48 and a shank aft surface 50 in the axial direction. The shank 40 is configured, by way of non-limiting example as a dovetail 52, to mount to a disk of the turbine engine 10 in order to rotatably drive the blade assembly 30. The shank 40 includes a set of inlet passages 54 for receiving a cooling fluid (denoted "CF") for cooling the blade assembly 30.

The airfoil 44 meets the platform 42 at a root 56. The airfoil 44 extends radially outward from the root 56 toward a tip 58 to define the span length SL. The span length SL is defined parallel to the radial axis *RA.* Additionally, the airfoil 44 includes an outer wall 60 defining an exterior surface 62 including a first side illustrated as a pressure side 64 and a second side illustrated as a suction side 65. The airfoil 44 extends between an airfoil leading edge 66 and an airfoil trailing edge 67 downstream from the airfoil leading edge 66. The airfoil leading edge 66 and the airfoil trailing edge 67 separate the pressure side 64 from the suction side 65. An internal cooling passage 68 is provided or formed within the airfoil 44. A turbulator 70 is located within the internal cooling passage 68. The turbulator 70 has a chevron shape with a nose 100. A reference plane 101 is defined for measurement with respect to the nose 100 of the turbulator 70. A tip cap 72 at least partially closes the internal cooling passage 68 at the tip 58.

In operation, an engine fluid flow F flows along the outer wall 60 of the blade assembly 30. The engine fluid flow F flows generally in the axial direction, from forward to aft, while the local directionality can vary as the engine fluid flow Fis driven or turned within the turbine engine 10. The cooling fluid CF is fed to the set of inlet passages 54 and flows into the internal cooling passage 68 to cool the airfoil 44. The cooling fluid CF is provided throughout the airfoil 44 and exhausted from the internal cooling passage 68 via cooling holes, such as exhausting as a cooling film along the outer wall 60. The turbulator 70 changes the flow of the cooling fluid CF. For example, the turbulators 70 disrupt (e.g., turbulate or alter) the flow of the cooling fluid CF, increasing local heat transfer, such as from the exterior surface 62 from the airfoil 44 to the cooling fluid CF. The cooling fluid CF is exhausted from the internal cooling passage 68, such as forming a cooling film along the exterior surface 62.

Materials used to form the blade assembly 30 include, but are not limited to, steel, refractory metals such as titanium, or superalloys based on nickel, cobalt, or iron, ceramic matrix composites, or combinations thereof. The structures can be formed by a variety of methods, including additive manufacturing, casting, electroforming, or direct metal laser melting, in non-limiting examples.

As used herein, the terms "additively manufactured" or "additive manufacturing techniques or processes" refer generally to manufacturing processes wherein successive layers of material(s) are provided on each other to "build-up," layer-by-layer, a three-dimensional component. The successive layers generally fuse together to form a monolithic component which may have a variety of integral subcomponents. Although additive manufacturing technology is described herein as enabling fabrication of complex objects by building objects point-by-point, layer-by-layer, typically in a vertical direction, other methods of fabrication are possible and within the scope of the present subject matter. For example, although the discussion herein refers to the addition of material to form successive layers, one skilled in the art will appreciate that the methods and structures disclosed herein may be practiced with any additive manufacturing technique or manufacturing technology. For example, embodiments of the present disclosure may use layer-additive processes, layer-subtractive processes, or hybrid processes.

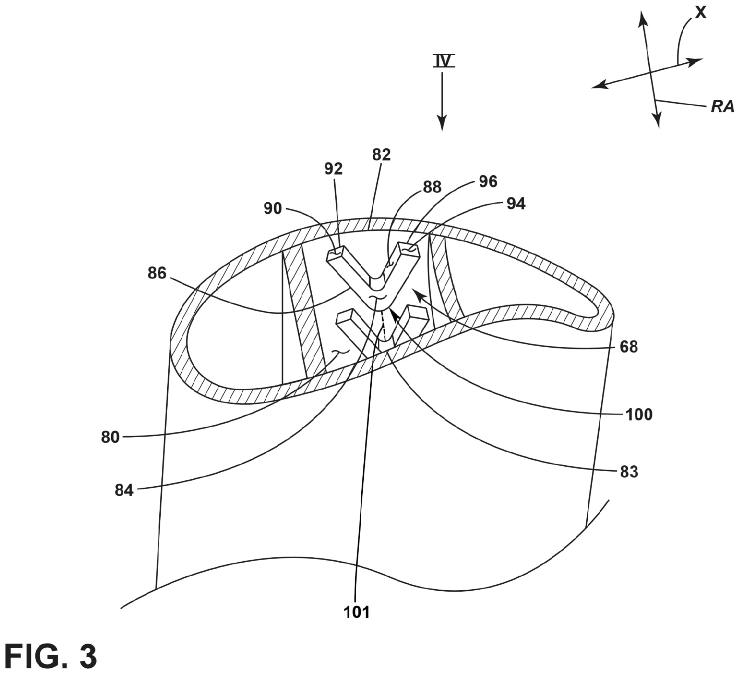

Turning to FIG. 3, a schematic perspective view of the airfoil 44 of FIG. 2 with the tip cap 72 removed, better illustrating the turbulator 70. The turbulator 70 has a chevron shape and positions in the internal cooling passage 68. The internal cooling passage 68 is defined by an inner surface 80, which can be an interior surface of the outer wall 60, for example. The inner surface 80 can include a first portion 82 spaced from a second portion 83 by the internal cooling passage 68. The turbulator 70 extends from the first portion 82 of the inner surface 80 into the internal cooling passage 68 towards the second portion 83.

The turbulator 70 includes a front face 84 that can face the second portion 83, for example. An upstream face 86 extends between the front face 84 and the inner surface 80 and can confront a flow of fluid within the internal cooling passage 68. As shown, the upstream face 86 extends from the first portion 82 of the inner surface 80 and is radially closest to the root 56 (FIG. 2), while any orientation defined by a flow direction through the internal cooling passage 68 is contemplated. A downstream face 88 extends between the front face 84 and the inner surface 80 and can position opposite of the upstream face 86.

A first top face 90 of the turbulator 70 extends between the upstream face 86, the downstream face 88, and the front face 84 to the inner surface 80.

A second top face 94 of the turbulator 70, axially spaced from the first top face 90, extends between the upstream face 86, the downstream face 88, and the front face 84 to the inner surface 80.

The upstream face 86 and the downstream face 88 of the turbulator 70 each curve between the first top face 90 and the second top face 94 to define a chevron shape for the turbulator 70. The curved upstream face 86 defines a turbulator nose 100 as the upstream-most position for the upstream face 86 having a radius of curvature. A reference measurement plane 101 can be defined with respect to the position of the turbulator nose 100 (e.g., at a point of maximum curvature of the upstream face 86 of the turbulator 70 farthest from the top faces 90, 94 of the same turbulator 70.

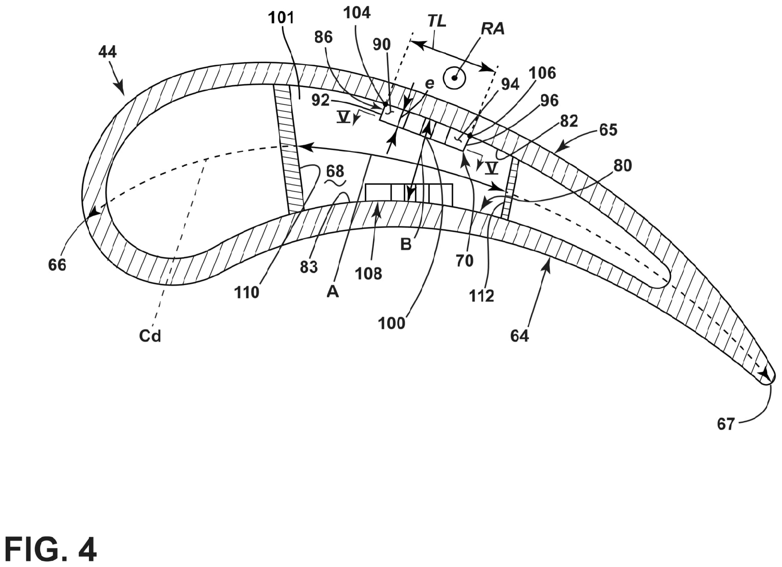

The first top face 90 can define a first edge, the second top face 94 can define a second edge, or both the first top face 90 and the second top face 94 can define a first edge and a second edge. For example, the downstream face 88 and the upstream face 86 can intersect a third portion 110 of the inner surface 80 to define the first edge or a fourth portion 112 of the inner surface 80 to define the second edge. In other words, as the turbulator length *TL* (FIG. 4) approaches the cavity width A (FIG. 4), the area of the first top face 90 or the second top face 94 decreases.

Alternatively, the upstream face 86, the downstream face 88 and the front face 84 can taper towards the first portion 82 to form a wedge-shaped intersection with the inner surface 80 at can define the first edge. Additionally, or alternatively, the upstream face 86, the downstream face 88 and the front face 84 can taper to form a wedge-shaped intersection with the inner surface 80 at can define the second edge, where the second edge is spaced from the first edge.

FIG. 4 is a cross-sectional view of the airfoil 44 taken from above the airfoil 44 as it is oriented in FIG. 3. A first intersection is defined where the first top face 90, the upstream face 86, and the first portion 82 of the inner surface 80 of the turbulator 70 intersect, converge, or otherwise connect.

The internal cooling passage 68 defined by the inner surface 80 can be defined by the first portion 82, the second portion 83, the third portion 110, and the fourth portion 112. The third portion 110 and the fourth portion 112 of the inner surface 80 extend through an interior of the airfoil 44 or a portion of the interior of the airfoil 44. More specifically, the third portion 110 extends from the pressure side 64 towards the suction side 65, or extends from the suction side 65 towards the pressure side 64. The fourth portion 112 extends from the pressure side 64 towards the suction side 65, or extends from the suction side 65 towards the pressure side 64.

A first edge 92 is defined as a region in which the first top face 90 meets the upstream face 86. A first intersection 104 is defined to be a point at which the first edge 92 and the first portion 82 of the inner surface 80 of the turbulator 70 intersect, converge, or otherwise connect.

A second intersection 106 is defined where the second top face 94, the upstream face 86, and the first portion 82 of the inner surface 80 of the turbulator 70 intersect, converge, or otherwise connect. A second edge 96 is defined as a region in which the second top face 94 meets the upstream face 86. The second intersection 106, in other words, is defined where the second edge 96 meets the first portion 82 of the inner surface 80.

As shown in the example of FIG. 4, a first dimension or cavity width (denoted "A") is a distance measured across the internal cooling passage 68 between portions of the inner surface 80 that extend through the interior of the airfoil 44 between the pressure side 64 and the suction side 65, where the cavity width A is measured in a chordwise direction Cd along a camber line. That is, the cavity width A is measured from the third portion 110 to the fourth portion 112 in the chordwise direction Cd along the camber line (labeled in FIG. 4, for example, as Cd, with the relevant portion also labeled as A). As such, the cavity width A (e.g., 0.05 - 1.27 cm) is a single distance measurement across the internal cooling passage 68 in the chordwise direction Cd along the camber line taken in the reference measurement plane 101 defined with respect to the turbulator nose 100 and perpendicular to the radial direction defined by the radial axis RA.

A second dimension or cavity height B is defined as a distance measured across the internal cooling passage 68 from the first portion 82 of the inner surface 80 to the second portion 83 of the inner surface 80. The cavity height B is measured perpendicular to the chordwise direction Cd. The cavity height B (e.g., 0.05 - 1.27 cm) is a single measurement taken in the reference measurement plane 101 defined at the turbulator nose 100 and perpendicular to the radial direction defined by the radial axis RA.

A turbulator length *TL* is defined as a distance measured from the first intersection 104 to the second intersection 106 of the second top face 94, the upstream face 86, and the first portion 82 of the inner surface 80. The turbulator length *TL* is equal to or less than the cavity width A. More specifically, a ratio of the turbulator length *TL* to the cavity width A is greater than zero and less than or equal to 1:1.3333. That is, the turbulator length *TL* is 75% or less of the cavity width A.

A cavity aspect ratio C is defined as the ratio between the cavity height B and the cavity width A. The cavity aspect ratio C is in a range from 0.1 to 10. For example, a desired manufacturing range of the cavity aspect ratio *C* is in a range from 0.1 to 6, inclusive of the endpoints. Another example is that the cavity aspect ratio *C* is in a range from 0.1 to 3, inclusive of the endpoints. The benefit of lower values for the cavity aspect ratio *C* is increased wall to wall interactions, which further increases internal cooling.

A turbulator height e is defined as the greatest distance (i.e., maximum distance) measured from the first portion 82 of the inner surface 80 to the front face 84 of the turbulator 70. The turbulator height e is measured perpendicular to the first portion 82. The turbulator height *e* is in a range from 0.0127 centimeters to 0.1524 centimeters (approximately 0.005 inches to 0.060 inches), inclusive of the endpoints. For example, a desired manufacturing range of the turbulator height *e* is in a range from 0.0254 centimeters to 0.0762 centimeters (approximately 0.010 inches to 0.030 inches), inclusive of the endpoints. Another example is that the turbulator height e is in a range from 0.0127 centimeters to 0.0635 centimeters (approximately 0.010 inches to 0.025 inches), inclusive of the endpoints to provide additional cooling benefit to the engine component as the distance the turbulator 70 extends into the internal cooling passage 68 increases to improve cooling while considering weight.

The turbulator height e is less than the cavity height B. It is contemplated that the turbulator height e is between 1% and 40% of the cavity height B as to not block portions of the internal cooling airflow. It is further contemplated that the turbulator height *e* is between 1% and 20% of the cavity height B to maintain the internal cooling airflow and decrease pressure drop of the internal cooling airflow.

A second turbulator 108 spaced from the turbulator 70 extends into the internal cooling passage 68 from the inner surface 80. The second turbulator 108 is located at, for example, the second portion 83. The second turbulator 108 and the turbulator 70 define a turbulator pair. In other words, a turbulator pair can be located at opposite walls of the internal cooling passage 68. Alternatively, a turbulator pair can be axially spaced and located on the same wall of the internal cooling passage 68. In other words, a turbulator pair can both extend from, for example, the first portion 82 or the second portion 83. Any number of turbulator pairs are contemplated within the internal cooling passage 68. In a non-limiting example, the turbulator pair can have one or more of the same radius of curvature *R*, turbulator length *TL,* or other dimension, however different dimensions the first and second turbulators 70, 108 are contemplated. Further, it is also contemplated that the orientations of the first and second turbulators 70, 108 can be different.

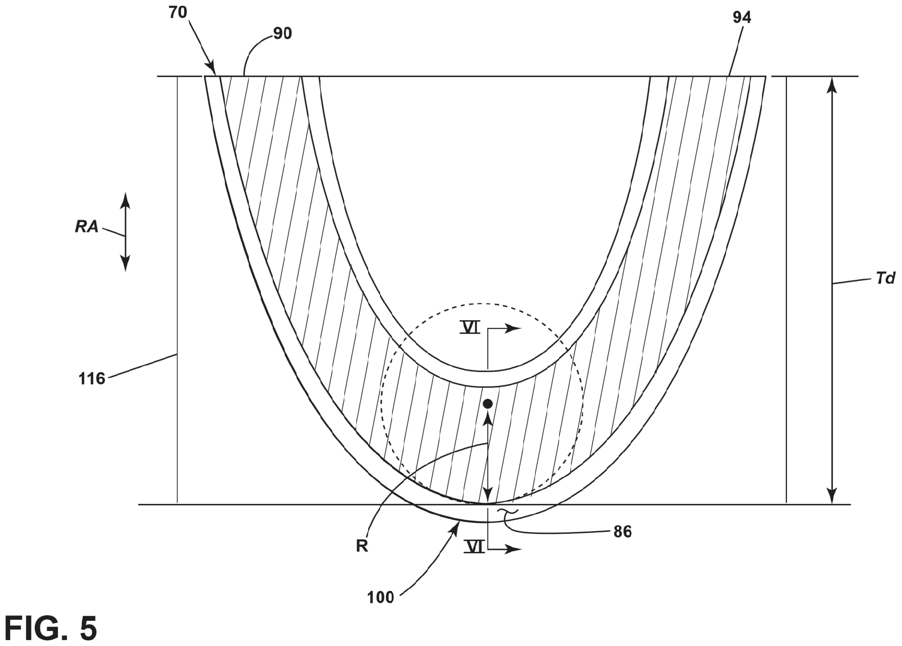

FIG. 5 is a cross-sectional view of the turbulator 70 of FIG. 4 taken along section V-V. The turbulator 70 extends a turbulator distance *Td* from the first top face 90 or the second top face 94 to the turbulator nose 100 and is measured in a plane 116 parallel to one or more portions of the first portion 82 (FIG. 4) of the inner surface 80 (FIG. 4)..

A turbulator nose radius *R* is defined as a radius of curvature of the turbulator nose 100 measured along the upstream face 86, wherein the radius of curvature is greater than zero. That is, the turbulator nose 100 is defined as a most upstream curved portion of the upstream face 86 of the turbulator 70. The turbulator nose radius *R* is in a range from 0.0127 centimeters to 1.905 centimeters (approximately 0.005 inches to 0.75 inches), inclusive of the endpoints. For example, for manufacturability, the turbulator nose radius *R* is in a range from 0.0254 centimeters to 1.27 centimeters (approximately 0.01 inches to 0.500 inches), inclusive of the endpoints. The turbulator nose radius *R* within this range reduces air pressure drop as the cooling fluid CF in the internal cooling passage 68 flows adjacent or over the turbulator nose 100. In another example in which the turbulator 70 provides greater turbulence and improved heat transfer, the turbulator nose radius *R* is in a range from 0.0254 centimeters to 0.508 centimeters (approximately 0.01 inches 0.200 inches), inclusive of the endpoints.

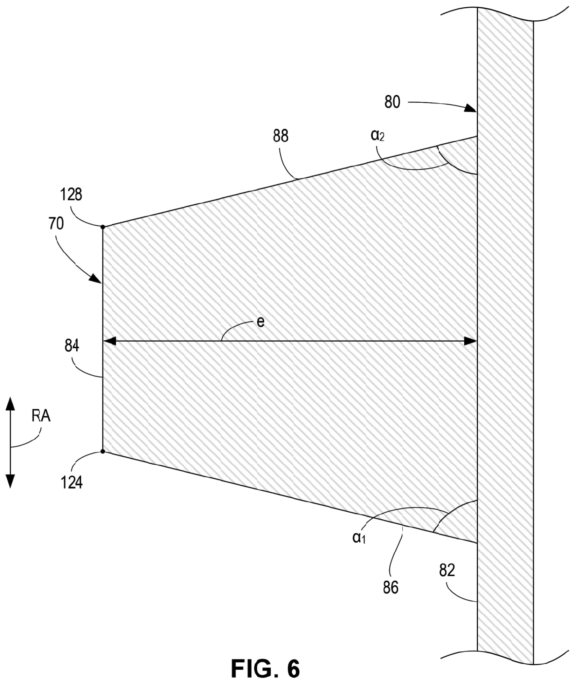

FIG. 6 is a cross-sectional perspective view of the turbulator 70 taken along line VI-VI of FIG. 5. The turbulator 70 has the turbulator height *e* defined as the greatest (maximum) distance measured from the first portion 82 of the inner surface 80 to the front face 84 of the turbulator 70 measured perpendicular to the first portion 82.

The turbulator 70 includes an upstream draft angle α₁ (also referred to as a forward side angle). The upstream draft angle α₁ is measured internally from the upstream face 86 to the first portion 82 of the inner surface 80 of the internal cooling passage 68 where the turbulator 70 is positioned. The upstream draft angle α₁ᵢ is between 45° and 135°, inclusive of endpoints. Values of the angle α₁ that are greater than or less than 90° reduce the effective friction of the turbulator features. To reduce accumulation of particles, the upstream draft angle α₁ is in a range from 45° to less than 90°. Further, to prevent accumulation of particles, reduce the effective friction of the turbulator 70 relative to airflow in the internal cooling passage 68, and increase surface area to further improve cooling, the upstream draft angle α₁ is in a range from 45° to 60°. Values of the angle α₁ that are greater than or equal to 45° and less than 90° or greater than 90° and less than or equal to 135° also increase the surface area exposed to cooling air.

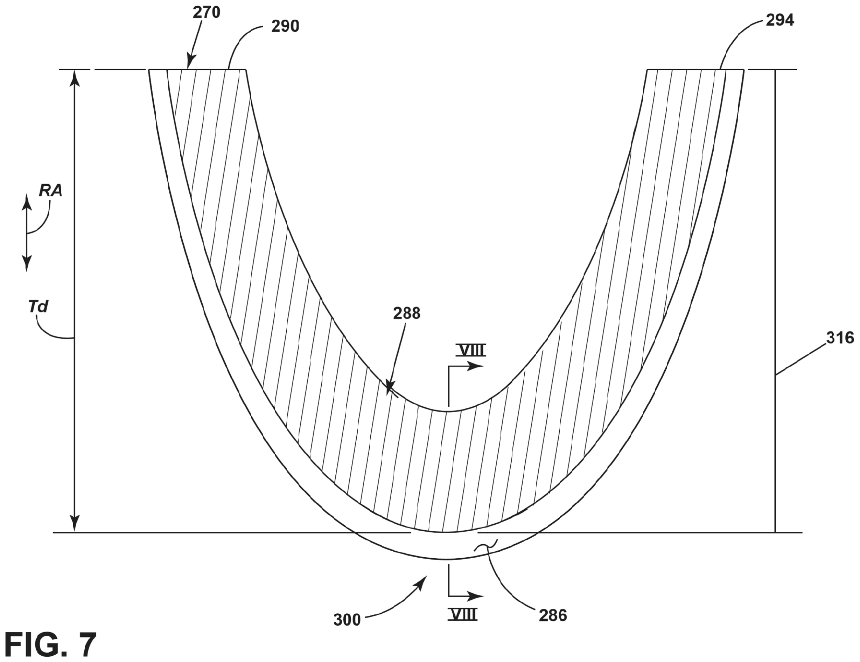

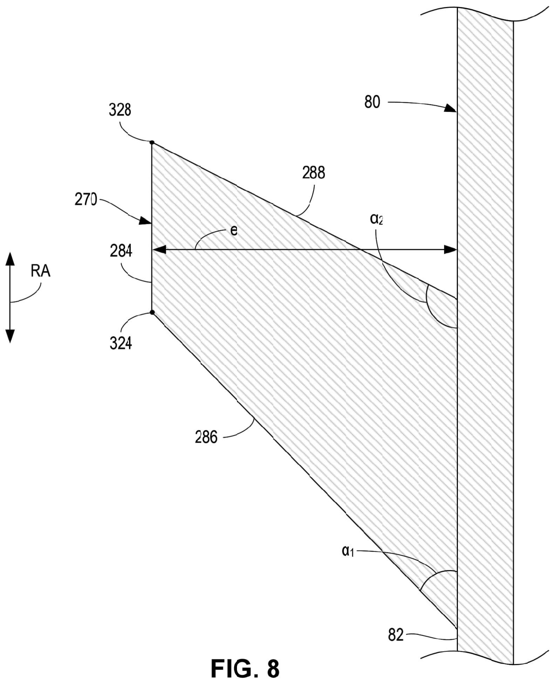

The turbulator 70 includes a downstream draft angle α₂ (also referred to as an aft or leeward side angle). The downstream draft angle α₂ is measured internally from the downstream face 88 to the first portion 82 of the inner surface 80 of the internal cooling passage 68 where the turbulator 70 is positioned. The downstream draft angle α₂ is between 45° and 135°, inclusive of endpoints. Values of the angle α₂ that are greater than or less than 90° reduce the effective friction of the turbulator 70 relative to airflow in the internal cooling passage 68. While illustrated, by way of example, as between 45° and less than 90°, the downstream draft angle α₂ can have a measure that is greater than 90° and less than 135°, as illustrated in FIG. 7 and FIG. 8. For example, the downstream draft angle α₂ can be in a range from greater than 90° to 135° which reduces the effective friction of the turbulator 70 relative to airflow in the internal cooling passage 68 and reduces the weight of the turbulator 70.

FIG. 7 is a cross-sectional view of a turbulator 270 that can be utilized within a component of the engine 10 of FIG. 1, for example. The turbulator 270 is similar to the turbulator 70 and can be used in the blade assembly 30 (FIG. 2). The turbulator 270 includes an upstream face 286, a downstream face 288, a first top face 290, a second top face 294, and turbulator nose 300 oriented similarly to the upstream face 86, the downstream face 88, the first top face 90, the second top face 94, and the turbulator nose 100 of the turbulator 70 of FIG. 3.

The turbulator distance *Td* is measured from the first top face 290 or the second top face 294 to the turbulator nose 300. The turbulator distance *Td* is measured in a plane 316 parallel to one or more portions of the first portion 82 (FIG. 4) of the inner surface 80 (FIG. 4).

FIG. 8 is a cross-sectional perspective view of the turbulator 270 taken along line VIII-VIII of FIG. 7. The turbulator 270 has the turbulator height e defined as the greatest distance (maximum distance) measured from the first portion 82 of the inner surface 80 to a front face 284 of the turbulator 270. As illustrated, the turbulator height e is measured perpendicular to the first portion 82.

The turbulator 270 includes an upstream draft angle α₁ (also referred to as a forward side angle). The upstream draft angle α₁ is measured internally from the upstream face 286 to the first portion 82 of the inner surface 80 of the internal cooling passage 68 where the turbulator 270 is positioned. The upstream draft angle α₁ is between 45° and 135°, inclusive of endpoints.

The turbulator 270 includes a downstream draft angle α₂ (also referred to as an aft or leeward side angle). The downstream draft angle α₂ is measured internally from the downstream face 288 to the first portion 82 of the inner surface 80 of the internal cooling passage 68 where the turbulator 270 is positioned. The downstream draft angle α₂ is between 45° and 135°, inclusive of endpoints.

Solutions for temperature control in an airfoil and/or for extending the life of an airfoil is a very labor and time-consuming processes. Finding a workable solution to creep or fatigue from thermal problems involves careful consideration of the inter-related influences of airflow, the internal cooling passage 68 dimensions, airflow pressure, thermal transfer, and internal cooling augmentation geometries influencing the airfoil and associated engine TOW.

Traditionally, a lattice extending across an internal cooling passage (e.g., from the pressure side to the suction side) provided a desired thermal transfer. However, the design involved adding significant weight to the airfoil. The design also significantly increased the drop in pressure of an internal cooling airflow through the internal cooling passage. The inventors sought to design turbulators that provided the desired thermal transfer that improved both weight and decreased the pressure drop of the airflow through the internal cooling passage.

The inventors looked to a lighter weight solution that included turbulators formed by discrete linear or arced pieces. While these turbulators were lighter and provided a reduced pressure drop of the internal cooling airflow when compared to the lattice, the turbulators formed by discrete linear or arced pieces did not provide the desired thermal transfer.

The inventors then manipulated the geometry of the discrete turbulators away from known dimensions or shapes. Unexpectedly, the inventors determined that a chevron shaped turbulator having a turbulator height *e* of 0.0381 centimeters and rounded nose with a turbulator nose radius R of 0.0635 centimeters for an internal cooling passage having a cavity aspect ratio C of 0.8 improved the thermal transfer to desired levels while keeping the weight and pressure drop through the internal cooling passage at desired levels below that of the lattice design.

Chevron shaped turbulators with noses having a non-zero radius of curvature are outside the normal scope of turbulator geometry due to, at least, manufacturing challenges. However, improved manufacturing (e.g., additive manufacturing) of airfoils allowed inventors to explore previously uncontemplated geometries.

Table 1 below illustrates examples of the airfoil developed by the inventors for the turbine engine 10 with each example including differing values that yielded workable, beneficial solutions to the problem as described above.

**Table 1**

| | **Cavity Aspect Ratio *C*** | **Turbulator Nose Radius *R* (cm)** | **Turbulator height *e* (cm)** |
|---|---|---|---|
| Example 1 | 10 | 0.0127 | 0.1524 |
| Example 2 | 6 | 0.0254 | 0.0762 |
| Example 3 | 5 | 0.0635 | 0.0508 |
| Example 4 | 3 | 0.0254 | 0.0635 |
| Example 5 | 2 | 0.0381 | 0.0127 |
| Example 6 | 2 | 0.127 | 0.0381 |
| Example 7 | 1 | 0.0254 | 0.0508 |
| Example 8 | 1 | 1.588 | 0.0833 |
| Example 9 | 0.8 | 0.0635 | 0.0381 |
| Example 10 | 0.5 | 1.127 | 0.0508 |
| Example 11 | 0.5 | 1.905 | 0.0635 |
| Example 12 | 0.25 | 0.127 | 0.0635 |
| Example 13 | 0.25 | 0.635 | 0.0127 |
| Example 14 | 0.1 | 0.508 | 0.0127 |
| Example 15 | 0.1 | 1.27 | 0.0254 |
| Example 16 | 0.1 | 1.905 | 0.0127 |

Inventors further developed the geometries of the chevron shaped turbulator, creating ranges and relationships between geometric measurements of the turbulator height and the turbulator nose radius of the chevron shaped turbulator, and the cavity aspect ratio of the internal cooling passage that provided the technical effect of reduced weight, improved thermal transfer, and reduced pressure drop of the internal cooling airflow of the internal cooling passage.

The inventors developed a number of designs for internal cooling passages and evaluated their effects on the combined influences of airflow, dimensions of the internal cooling passage 68, airflow pressure, thermal transfer, and internal cooling augmentation geometries on an airfoil. The inventors unexpectedly created a desirable improvement in heat transfer augmentation of the airfoil (e.g., creep and fatigue resistance) for a defined engine operating characteristic.

The inventors determined that the strength of heat transfer augmentation is dependent on the relationship between the cavity aspect ratio *C*, the turbulator height *e* and the nose radius *R* of the turbulator 70, 270 having a chevron shape. More specifically, the inventors created turbulator geometries having a relationship between and interaction among the nose radius *R* of the turbulator 70, 270, the turbulator height *e*, and the cavity aspect ratio *C* that improve heat extraction and reduce thermal creep and fatigue. The relationship between the cavity aspect ratio *C*, the turbulator height e and the nose radius *R* of the turbulator 70, 270 decreases the drop in pressure of the cooling fluid CF, while the chevron shape of the turbulator with the curved turbulator nose 100, 300 provides desired turbulation.

That is, the inventors created, unexpectedly given knowledge in the art, engine designs in which the nose radius *R* of the turbulator 70, 270 having a chevron shape along with the turbulator height *e* and the cavity aspect ratio *C*, within in a certain range, to improve creep and fatigue resistance for the airfoil. The chevron shape includes the turbulator nose 100, 300 with the nose radius *R* and two arms that extend from the turbulator nose 100, 300 to form the U-shape or V-shape, illustrated as the turbulator nose 100, 300 extending to the first top face 90, 290 and the second top face 94, 294. One benefit of the chevron shape of the turbulator 70, 270 is that the arms generate aerodynamic trips, generating two downstream vortexes that improve heat transfer to the inner surface 80. The nose radius *R* helps increase the heat transfer at least at the curved upstream face 86 of the turbulator 70, 270. The non-zero nose radius *R* also helps reduce, minimize, or eliminates a decrease in the air pressure of the cooling fluid CF in the internal cooling passage 68 as it passes over the turbulator 70, 270.

The inventors balanced changes between the nose radius *R* of the turbulator 70, 270 with changes in the turbulator height *e* and the cavity aspect ratio *C* as necessary in order to provide adequate heat transfer from the airfoil, while maintaining manufacturability, minimizing weight, and maintaining as much pressure as possible of the airflow of the internal cooling passage 68 in contact with the turbulator 70, 270. For example, increasing the nose radius *R* allows for weaker-vortex enhancement than a lower nose radius *R*, which is beneficial for specific cavity aspect ratios *C*, turbulator heights *e*.

The set of improved designs that were developed by the inventors can be categorized by an expression EQ1. The ranges associated with EQ1 denote an improved airfoil design, better suited to dissipate heat from the airfoil using turbulators 70, 270 in the internal cooling passage 68. The ranges associated with EQ1 also reduce creep and fatigue.

A first expression, referred to herein as *"EQ1",* is defined as Expression (1): $EQ 1 = \left(\frac{1}{C}\right) \left(\frac{R}{e}\right) ,$ (1), wherein C represents the number of cavity aspect ratio based on the cavity height B and the cavity width A of the internal cooling passage 68. *R* represents the turbulator nose radius defined as a radius of curvature of the turbulator nose 100, 300 of the chevron shaped turbulator 70, 270 measured along the upstream face 86, 286, wherein the radius of curvature is greater than zero.

It was found that the range of values for *Expression 1* correlate to strong heat transfer augmentation for the airfoil. While narrowing these multiple factors to a region of possibilities saves time, money, and resources, the largest benefit is improved heat extraction from the airfoil. A design range for *Expression 1* from 0.00833 to 1500 results in the airfoil with appropriate heat transfer, while remaining within desired manufacturing dimensions.

Known turbulators located in cooling passages that have a chevron shape do not have a nose with a radius of curvature greater than zero. Therefore, known turbulators would have a zero value and be outside of the range 0.00833 to 1500. Turbulators having a combination of turbulator height, cavity aspect ratios, and the turbulator nose radius above 1500 are not as effective at cooling because the nose radius is disproportionately larger than the combined effects of the cavity aspect ratios and turbulator height. When these dimensions are reached, the tabulator can lose its chevron shape, may not fit within the cavity, decrease the pressure of the cooling airflow beyond a predetermined threshold, not provide the desired thermal transfer, or any combination thereof.

Therefore, benefits are realized when the airfoil has a geometry where *Expression 1* falls within the range 0.0556 to 500. Such benefits include a reduction of thermal creep or fatigue in addition to the improved heat transfer augmentation, which reduces the need for replacement parts and increases the lifetime of the airfoil. This provides for increased durability for the airfoil, which decreases required maintenance and costs, while increasing TOW.

Further still, benefits are realized when the airfoil has a geometry where *Expression 1* falls within the range 0.1333 to 400. Such benefits include improved internal heat extraction by internal cooling augmentation at the manufacturability of desired values of the nose radius *R* of the turbulator 70, 270 with changes in the turbulator height *e* and the cavity aspect ratio *C*. The combined effect of the nose radius R, the turbulator height e and the cavity aspect ratio C within the range disclosed results in reduction of thermal creep or fatigue through strengthened heat transfer augmentation, which further increases TOW.

Table 2 below illustrates examples of the airfoil for the turbine engine 10 with each example including differing values that yielded workable solutions to the problem as described above, by providing detailed values that remove heat from the airfoil.

**Table 2**

| | **Cavity Aspect Ratio *C*** | **Turbulator Nose Radius *R* (cm)** | **Turbulator height *e* (cm)** | **Equation 1 EQ1** |
|---|---|---|---|---|
| Example 1 | 10 | 0.0127 | 0.1524 | 0.0083 |
| Example 2 | 6 | 0.0254 | 0.0762 | 0.0556 |
| Example 3 | 5 | 0.0635 | 0.0508 | 0.25 |
| Example 4 | 3 | 0.0254 | 0.0635 | 0.1333 |
| Example 5 | 2 | 0.0381 | 0.0127 | 1.5 |
| Example 6 | 2 | 0.127 | 0.0381 | 1.6667 |
| Example 7 | 1 | 0.0254 | 0.0508 | 0.5 |
| Example 8 | 1 | 1.588 | 0.0833 | 19.0636 |
| Example 9 | 0.8 | 0.0635 | 0.0381 | 2.0833 |
| Example 10 | 0.5 | 1.127 | 0.0508 | 44.37 |
| Example 11 | 0.5 | 1.905 | 0.0635 | 60 |
| Example 12 | 0.25 | 0.127 | 0.0635 | 8 |
| Example 13 | 0.25 | 0.635 | 0.0127 | 200 |
| Example 14 | 0.1 | 0.508 | 0.0127 | 400 |
| Example 15 | 0.1 | 1.27 | 0.0254 | 500 |
| Example 16 | 0.1 | 1.905 | 0.0127 | 1500 |

In another exemplary embodiment, the inventors also developed an embodiment of the chevron shaped turbulator having a turbulator height *e* of 0.0381 centimeters and rounded nose with a turbulator nose radius *R* of 0.127 centimeters for an internal cooling passage having a cavity aspect ratio *C* of 2, where an upstream surface of the chevron shaped turbulator had an upstream draft angle α₁ of 60° and a downstream surface had a downstream draft angle α₂ of 95°. Inventors determined similar improved thermal transfer while keeping the weight and pressure drop through the internal cooling passage at desired levels below that of the lattice design. Inventors also noted the upstream draft angle α₁ of 60° reduced the accumulation of particles upstream of the chevron shaped turbulator and improved thermal transfer by angling (or ramping) an upstream surface of the chevron shaped turbulator. Further, the inventors improved thermal transfer by the downstream draft angle α₂ having a value greater than 90° Further yet, the weight of the chevron shaped turbulator further decreased using the 95° downstream draft angle α₂.

Table 3 below illustrates examples of the airfoil for the turbine engine 10 with each example including differing values that yielded beneficial solutions to the problem as described above, by providing detailed values that remove heat from the airfoil.

**Table 3**

| | **Cavity Aspect Ratio *C*** | **Turbulator Nose Radius *R* (cm)** | **Turbulator height *e* (cm)** | **Upstream Draft Angle α₁ (degrees)** | **Downstream Draft Angle α₂ (degrees)** |
|---|---|---|---|---|---|
| Example 1 | 10 | 0.0127 | 0.1524 | 45 | 45 |
| Example 2 | 6 | 0.0254 | 0.0762 | 45 | 45 |
| Example 3 | 5 | 0.0635 | 0.0508 | 70 | 95 |
| Example 4 | 3 | 0.0254 | 0.0635 | 45 | 45 |
| Example 5 | 2 | 0.0381 | 0.0127 | 70 | 90 |
| Example 6 | 2 | 0.127 | 0.0381 | 60 | 95 |
| Example 7 | 1 | 0.0254 | 0.0508 | 60 | 95 |
| Example 8 | 1 | 1.588 | 0.0833 | 80 | 70 |
| Example 9 | 0.8 | 0.0635 | 0.0381 | 75 | 100 |
| Example 10 | 0.5 | 1.127 | 0.0508 | 120 | 120 |
| Example 11 | 0.5 | 1.905 | 0.0635 | 135 | 125 |
| Example 12 | 0.25 | 0.127 | 0.0635 | 70 | 115 |
| Example 13 | 0.25 | 0.635 | 0.0127 | 45 | 45 |
| Example 14 | 0.1 | 0.508 | 0.0127 | 135 | 135 |
| Example 15 | 0.1 | 1.27 | 0.0254 | 135 | 135 |
| Example 16 | 0.1 | 1.905 | 0.0127 | 135 | 135 |

The Inventors further developed the chevron shaped turbulator with upstream and downstream angles, determining ranges and relationships between geometric measurements of the turbulator height, the turbulator nose radius, the upstream draft angle, and the downstream draft angle of the chevron shaped turbulator, and the cavity aspect ratio of the internal cooling passage that provided the technical effect of reduced weight, improved thermal transfer, reduced pressure drop of the internal cooling airflow of the internal cooling passage, and reduced particle accumulation.

The inventors developed designs for airfoils with internal cooling passages to evaluate effects on the combined influences of airflow, dimensions of the internal cooling passage 68, airflow pressure, thermal transfer, particle accumulation, and internal cooling augmentation geometries on the airfoil or other airfoil. The inventors created a desirable improvement in heat transfer augmentation of the airfoil (e.g., creep and fatigue resistance) for a defined engine operating characteristic. The designs were further expanded to also consider evaluation of particle accumulation and weight in light of the geometry of the chevron turbulator 70.

The inventors created designs that the strength of heat transfer augmentation and amount of particle accumulation based on a combination of the cavity aspect ratio *C*, the turbulator height e, the upstream draft angle α₁, the downstream draft angle α₂, and the nose radius *R* of the turbulator 70, 270 having a chevron shape. More specifically, the inventors created geometries for turbulators having a relationship between and the interaction among the nose radius *R* of the turbulator 70, 270, the turbulator height *e*, the upstream draft angle α₁, the downstream draft angle α₂, and the cavity aspect ratio *C* that improves heat extraction, reduce particle accumulation, and reduce thermal creep and fatigue. The particular combination of the cavity aspect ratio *C*, the turbulator height *e*, the upstream draft angle α₁, the downstream draft angle α₂, and the nose radius *R* of the turbulator 70, 270 decreases the drop in pressure of the cooling fluid CF while the turbulator having the chevron shape, with the curved turbulator nose 100, 300 provides the desired turbulation. The configuration also further decreases the mass of the chevron turbulator 70, 270.

The inventors balanced changes between the nose radius *R* of the turbulator 70, 270 with changes in the turbulator height e, the cavity aspect ratio *C*, the upstream draft angle α₁, and the downstream draft angle α₂ in order to provide adequate heat transfer from the airfoil, while maintaining manufacturability, minimizing weight, minimizing particle accumulation, and maintaining as much pressure as possible of the airflow of the internal cooling passage 68 in contact with the turbulator 70, 270.

That is, the upstream draft angle α₁ and the downstream draft angle α₂ are within a range that further enhances heat transfer benefit in relationship to the nose radius *R* of the turbulator 70, 270 the turbulator height *e*, and the cavity aspect ratio *C* while limiting particle accumulation and weight of the turbulator 70, 270.

The designs developed by the inventors can be characterized by a second expression, EQ2. The ranges associated with EQ2 identify an improved airfoil design, better suited to dissipate heat from the airfoil using turbulators 70, 270 in the internal cooling passage 68. The ranges associated with EQ2 also reduce particle accumulation, minimize mass, and reduce creep and fatigue.

A second expression, referred to herein as *"EQ2",* is defined as Expression (2): $EQ 2 = \left(\frac{1}{C}\right) \left(\frac{R}{e}\right) \left(\frac{{∝}_{1}}{45 °}\right) \left(\frac{{∝}_{2}}{45 °}\right) ,$ (2), *wherein C* represents the number of cavity aspect ratio based on the cavity height B of the internal cooling passage 68 and the cavity width A of the turbulator 70, 270. *R* represents the turbulator nose radius defined as a radius of curvature of the turbulator nose 100, 300 of the chevron shaped turbulator 70, 270 measured along the upstream face 86, 286 wherein the radius of curvature is greater than zero. α₁ represents the upstream draft angle measured between the upstream face 86, 286 and the first line 123, 323. α₂ represents the downstream draft angle measured between the downstream face 88, 288 and the second line 125, 325. Table 2 below illustrates examples of the airfoil for the turbine engine 10 with each example including differing values that yielded workable solutions to the problem as described above, by providing detailed values that remove heat from the airfoil and reducing particle accumulation.

The inventors determined that the range of values for *Expression 2* correlate to strong heat transfer augmentation for the airfoil while being dust robust (e.g., reducing particular accumulation). While narrowing these multiple factors to a region of possibilities saves time, money, and resources, the largest benefit is improved heat extraction from the airfoil while being dust robust. A design range for *Expression 2* from 0.00833 to 13500 results in the airfoil with appropriate heat transfer, while remaining within desired manufacturing dimensions.

Benefits are realized when the airfoil has a geometry where *Expression 2* falls within the range 0.0556 to 4500. Such benefits include a reduction of thermal creep or fatigue in addition to the improved heat transfer augmentation, which reduces the need for replacement parts and increases the lifetime of the airfoil while reducing particle accumulation. This provides for increased durability for the airfoil, which decreases required maintenance and costs, while increasing TOW.

Further still, benefits are realized when the airfoil has a geometry where *Expression 2* falls within the range 0.1333 to 3600. Such benefits include improved internal heat extraction by internal cooling augmentation balance at the manufacturability of desired values of the nose radius *R* of the turbulator 70, 270 with changes in the turbulator height e and the cavity aspect ratio *C*. The combined effect of the nose radius *R*, the turbulator height *e*, and the cavity aspect ratio *C* within the range disclosed results in reduction of thermal creep or fatigue through strengthened heat transfer augmentation, which further increases TOW. The range further decreases particle accumulation within predetermined weight requirements.

Known turbulators located in cooling passages that have a chevron shape do not have a nose with a radius of curvature greater than zero. Therefore, known turbulators would have a zero value and be outside of the range 0.00833 to 13500. Turbulators having a relationship between the turbulator height, cavity aspect ratios, and the turbulator nose radius above 13500 are not as effective at cooling because the nose radius, upstream draft angle, downstream draft angle, or any combination thereof is disproportionately larger than the combined effects of the cavity aspect ratios and turbulator height. When these dimensions are reached, the tabulator can lose its chevron shape, not securely attach to the wall due to sharp draft angle, may not fit within the cavity, not provide the desired air pressure of the cooling air, not provide the desired thermal transfer, or any combination thereof.

**Table 4**

| | **Cavity Aspect Ratio *C*** | **Turbulator Nose Radius *R* (cm)** | **Turbulator height *e* (cm)** | **Upstream Draft Angle α₁ (degrees)** | **Downstream Draft Angle α₂ (degrees)** | **Equation 2 EQ2** |
|---|---|---|---|---|---|---|
| Example 1 | 10 | 0.0127 | 0.1524 | 45 | 45 | 0.00833 |
| Example 2 | 6 | 0.0254 | 0.0762 | 45 | 45 | 0.0556 |
| Example 3 | 5 | 0.0635 | 0.0508 | 70 | 95 | 0.821 |
| Example 4 | 3 | 0.0254 | 0.0635 | 45 | 45 | 0.1333 |
| Example 5 | 2 | 0.0381 | 0.0127 | 70 | 90 | 4.6667 |
| Example 6 | 2 | 0.127 | 0.0381 | 60 | 95 | 4.6914 |
| Example 7 | 1 | 0.0254 | 0.0508 | 60 | 95 | 1.4074 |
| Example 8 | 1 | 1.588 | 0.0833 | 80 | 70 | 52.719 |
| Example 9 | 0.8 | 0.0635 | 0.0381 | 75 | 100 | 7.7160 |
| Example 10 | 0.5 | 1.127 | 0.0508 | 120 | 120 | 315.5206 |
| Example 11 | 0.5 | 1.905 | 0.0635 | 135 | 125 | 500 |
| Example 12 | 0.25 | 0.127 | 0.0635 | 70 | 115 | 31.8025 |
| Example 13 | 0.25 | 0.635 | 0.0127 | 45 | 45 | 200 |
| Example 14 | 0.1 | 0.508 | 0.0127 | 135 | 135 | 3600 |
| Example 15 | 0.1 | 1.27 | 0.0254 | 135 | 135 | 4500 |
| Example 16 | 0.1 | 1.905 | 0.0127 | 135 | 135 | 13500 |

The inventors developed an optimal set of beneficial designs and determined that within specific ranges. The ranges of the beneficial designs are expressed as EQ1 and EQ2 within determined boundaries.

The inventors determined that designs that did not satisfy the boundaries of EQ1 and EQ2 were not inventive designs exhibiting the beneficial characteristics and improvement they sought EQ1 and EQ2 with a desired degree of thermal, manufacturing, and operational performance for specific engine configurations.

By modifying the nose radius R of the turbulator 70, 270 the turbulator height *e*, and the cavity aspect ratio *C*, the upstream draft angle α₁ and the downstream draft angle α₂, within the particular described ranges, the inventors developed airfoil geometries with a strengthened heat transfer augmentation, with reduced thermal creep and fatigue, reduced particle accumulation, and increasing TOW of the airfoil.

The cavity aspect ratio *C* is defined as the ratio between the cavity height B and the cavity width A. The cavity aspect ratio *C* is in a range from 0.1 to 10. For example, a desired manufacturing range of the cavity aspect ratio *C* can be in a range from 0.1 to 6, inclusive of the endpoints. Another example is that the cavity aspect ratio *C* can be in a range from 0.1 to 3, inclusive of the endpoints. This range for the cavity aspect ratio *C* minimizes pressure loss of the cooling fluid CF as it flows through the internal cooling passage 68. The aforementioned range for the cavity aspect ratio *C* can also provide a desired surface area for contact between the cooling fluid CF, a desired surface area to retain turbulators, or a combination thereof.

The turbulator height e is defined as the greatest distance measured from the first portion 82 of the inner surface 80 to the front face 84, 284 of the turbulator 70, 270. The turbulator height e is measured perpendicular to the first portion 82. The turbulator height e is in a range from 0.0127 centimeters to 0.1524 centimeters (approximately 0.005 inches to 0.060 inches), inclusive of the endpoints. For example, a desired manufacturing range of the turbulator height e can be in a range from 0.0254 centimeters to 0.0762 centimeters (approximately 0.010 inches to 0.030 inches), inclusive of the endpoints. Another example is that the turbulator height e can be in a range from 0.0127 centimeters to 0.0635 centimeters (approximately 0.010 inches to 0.025 inches), inclusive of the endpoints to provide additional cooling benefit to the airfoil as the distance the turbulator 70, 270 extends into the internal cooling passage 68 increases to improve cooling while considering weight.

The turbulator nose radius *R* is defined as a radius of curvature of the turbulator nose 100, 300 measured along the upstream face 86 286, wherein the radius of curvature is greater than zero. That is, the turbulator nose 100, 300 is defined as a curved portion of the upstream face 86, 286. The turbulator nose radius *R* is in a range from 0.0127 centimeters to 1.905 centimeters (approximately 0.005 inches to 0.75 inches), inclusive of the endpoints. For example, for manufacturability, the turbulator nose radius *R* can be in a range from 0.0254 centimeters to 1.27 centimeters (approximately 0.01 inches to 0.500 inches), inclusive of the endpoints. The turbulator nose radius *R* within this range can reduce air pressure drop as the cooling fluid CF in the internal cooling passage 68 flows adjacent or over the turbulator nose 100, 300. In another example in which the turbulator 70, 270 provides greater turbulence and improved heat transfer, the turbulator nose radius *R* can be in a range from 0.0254 centimeters to 0.508 centimeters (approximately 0.01 inches 0.200 inches), inclusive of the endpoints.

The inventors created designs with a certain configuration of the nose radius *R* of the turbulator 70, 270 the cavity aspect ratio *C*, and the turbulator height e, the upstream draft angle α₁ at the upstream face 86, 286 of the turbulator 70, 270 and the downstream draft angle α₂ at the downstream face 88, 288 of the turbulator 70, 270. The ranges of nose radius *R* of the turbulator 70, 270 the cavity aspect ratio *C*, and the turbulator height e including the upstream draft angle α₁ and the downstream face 88, 288 of the turbulator 70, 270 provide the benefit of additional reduction in particulate accumulation, further cooling improvement, a cost savings, or a reduction in the effective friction of the turbulator 70, 270 or any combination thereof. The inventors also determined that the chevron shaped turbulator 70, 270 can be used to modify the flow-field through the internal cooling passage 68 with a single object rather than needing multiple structures within the internal cooling passage 68.

The inventors created, unexpectedly given knowledge in the art, engine designs that including the ratio of the upstream draft angle α₁ and the downstream draft angle α₂ to a reference angle α, the relationship between the nose radius R of the turbulator 70, 270 along with a turbulator height e and a cavity aspect ratio C, within in a certain range, to improve creep and fatigue resistance for the airfoil.

The upstream draft angle α₁ is measured internally from the upstream face 86, 286 to the first portion 82 of the inner surface 80 of the internal cooling passage 68 where the turbulator 70 is positioned. The upstream draft angle α₁ is between 45° and 135°, inclusive of endpoints. Non-zero values of the angle α₁ reduce the effective friction of the turbulator features. To reduce accumulation of particles, the upstream draft angle α₁ can be in a range from 45° to 135°. Further, to prevent accumulation of particles, reduce the effective friction of the turbulator 70, 270 relative to airflow in the internal cooling passage 68, and increase surface area to further improve cooling, the upstream draft angle α₁ can be in a range from 45° to 60°. Values of the angle α₁ that are greater than or less than 90° increase the surface area exposed to cooling air.

The downstream draft angle α₂ is measured from the downstream face 88, 288 to the first portion 82 of the inner surface 80 of the internal cooling passage 68 where the turbulator 70 is positioned. The downstream draft angle α₂ is between 45° and 135°, inclusive of endpoints. Values of the angle α₂ that are greater than or less than 90° reduce the effective friction of the turbulator 70, 270 relative to airflow in the internal cooling passage 68. The downstream draft angle α₂ measuring greater than 90° and less than or equal to 135° is further illustrated in FIG. 7 and FIG. 8. For example, the downstream draft angle α₂ can be in a range that from greater than 90° to 135° which reduces the effective friction of the turbulator 70, 270 relative to airflow in the internal cooling passage 68 and reduces the weight of the turbulator 70, 270.

**Table 5**

| **Parameter:** | **Element:** | **Minimum** | **Maximum** | **Units** |
|---|---|---|---|---|
| *C* | Cavity Aspect Ratio | 0.1 | 10 | unitless |
| *R* | Turbulator Nose Radius | 0.0127 | 1.905 | centimeters |
| *e* | Turbulator height | 0.0127 | 0.1524 | centimeters |
| α₁ | Upstream Draft Angle | 45° | 135° | degrees |
| α₂ | Downstream Draft Angle | 45° | 135° | degrees |
| EQ1 | Equation 1 | 0.008333 | 1500 | unitless |
| EQ2 | Equation 2 | 0.008333 | 13500 | unitless |

Table 5 recaps the minimum and maximum values for the parameters as well as the expressions described above.

Further aspects of the disclosure are provided by the subject matter of the following clauses:
A turbine engine, comprising an engine core extending along an engine centerline and including a compressor section, and a turbine section in serial flow arrangement; an engine component having an internal cooling passage defined by an inner surface, the inner surface having a first portion and a second portion; and a turbulator located within the internal cooling passage and extending from the first portion of the inner surface into the internal cooling passage, the turbulator comprising a front face spaced from the first portion and the second portion; an upstream face extending between the front face and the inner surface; a downstream face extending between the front face and the inner surface opposite the upstream face; a cavity width is defined as a distance measured across the internal cooling passage between portions of the inner surface that extend through an interior of the engine component between a first side and a second side, wherein the cavity width is measured in a chordwise direction defined by a camber line; a cavity height is defined as a distance measured across the internal cooling passage defined by the inner surface between the first portion of the inner surface to the second portion of the inner surface, wherein the cavity height is measured along a line intersecting the turbulator nose and perpendicular to the chordwise direction; a cavity aspect ratio is defined as a ratio of the cavity height to the cavity width, wherein the cavity aspect ratio is in a range from 0.1 to 10, inclusive of endpoints; a turbulator nose radius is defined as a radius of curvature of a turbulator nose measured along the upstream face, wherein the radius of curvature is in a range from 0.0127 centimeters to 1.905 centimeters (0.005 inches to 0.75 inches), inclusive of endpoints; and a turbulator height is defined as a greatest distance measured perpendicular to the first portion of the inner surface to the front face of the turbulator, wherein the turbulator height is in a range from 0.0127 centimeters to 0.1524 centimeters (0.005 inches to 0.06 inches), inclusive of endpoints.

The turbine engine of any preceding clause, wherein the cavity aspect ratio (C), the turbulator nose radius (R), and the turbulator height (e), define a first value (EQ1) by the following expression: $EQ 1 = \left(\frac{1}{C}\right) \left(\frac{R}{e}\right)$, wherein the first value (EQ1) is in a range from 0.00833 to 1500, inclusive of endpoints.

The turbine engine of any preceding clause, wherein the turbulator further comprises an upstream draft angle measured between the upstream face and a first line, wherein the first line extends through an intersection of the upstream face and the front face of the turbulator and is perpendicular to a first extension line extending perpendicularly from the first portion and passing through the intersection of the upstream face and the front face of the turbulator.

The turbine engine of any preceding clause, wherein the upstream draft angle is in a range from 45° to 135°, inclusive of endpoints.

The turbine engine of any preceding clause, wherein the turbulator further comprises an downstream draft angle measured between the downstream face and a second line, wherein the second line extends through an intersection of the downstream face and the front face of the turbulator and is perpendicular to a second extension line extending perpendicularly from the first portion and passing through the intersection of the downstream face and the front face of the turbulator.

The turbine engine of any preceding clause, wherein the downstream draft angle is in a range from 45° to 135°, inclusive of endpoints.

The turbine engine of any preceding clause, wherein the upstream draft angle is in a range from 45° to less than 90°.

The turbine engine of any preceding clause, wherein the turbulator further comprises a downstream draft angle measured between the downstream face and a second line, wherein the second line extends through an intersection of the downstream face and the front face of the turbulator and is perpendicular to a second extension line extending perpendicularly from the first portion and passing through the intersection of the downstream face and the front face of the turbulator.

The turbine engine of any preceding clause, wherein the downstream draft angle is in a range from 45° to 135°.

The turbine engine of any preceding clause, wherein the downstream draft angle is in a range from greater than 90° to 135°.

The turbine engine of any preceding clause, further comprising a turbulator length defined as a distance measured from a first intersection to a second intersection of a second top face, the upstream face, and the first portion of the inner surface, wherein a ratio of the turbulator length to the cavity width is greater than zero and less than or equal to 1:1.3333.

The turbine engine of any preceding clause, wherein the engine component is an airfoil extending from a root to a tip.

The turbine engine of any preceding clause, further comprising a second turbulator extending from the second portion of the inner surface.

The turbine engine of any preceding clause, further comprising a third turbulator extending from the first portion of the inner surface.

The turbine engine of any preceding clause, further comprising a first top face extending between the upstream face, the downstream face, and the front face to the inner surface and a second top face, spaced from the first top face, the second top face extending between the upstream face, the downstream face, and the front face to the inner surface, wherein the downstream face is curved between the first top face and the second top face to define the turbulator nose.

The turbine engine of any preceding clause, further comprising a turbulator length defined as a distance measured from a first intersection to a second intersection of a second top face, the upstream face, and the first portion of the inner surface, wherein a ratio of the turbulator length to the cavity width is greater than zero and less than or equal to 1:1.3333.

The turbine engine of any preceding clause, wherein the engine component is an airfoil extending from a root to a tip, the engine component further comprising an upstream draft angle measured between the upstream face and a first line, wherein the first line extends through an intersection of the upstream face and the front face of the turbulator and is perpendicular to a first extension line extending perpendicularly from the first portion and passing through the intersection of the upstream face and the front face of the turbulator, and wherein the upstream draft angle is in a range from 45° to 135°, inclusive of endpoints; and an downstream draft angle measured between the downstream face and a second line, wherein the second line extends through an intersection of the downstream face and the front face of the turbulator and is perpendicular to a second extension line extending perpendicularly from the first portion and passing through the intersection of the downstream face and the front face of the turbulator, and wherein the downstream draft angle is in a range from 45° to 135°, inclusive of endpoints; wherein the cavity aspect ratio (C), the turbulator nose radius (R), the turbulator height (e), the upstream draft angle (α₁), and the downstream draft angle (α _2) define a second value (EQ2) by the following expression: a value (EQ2) by the following expression $EQ 2 = \left(\frac{1}{C}\right) \left(\frac{R}{e}\right) \left(\frac{{∝}_{1}}{45 °}\right) \left(\frac{{∝}_{2}}{45 °}\right)$_{,} wherein the second value (EQ2) is between 0.008333 and 13500, inclusive of endpoints.

The turbine engine of any preceding clause, further comprising a turbulator length defined as a distance measured from a first intersection to a second intersection of a second top face, the upstream face, and the first portion of the inner surface, wherein a ratio of the turbulator length to the cavity width is greater than zero and less than or equal to 1:1.3333.

The turbine engine of any preceding clause, further comprising a second turbulator extending from the second portion of the inner surface.

The turbine engine of any preceding clause, further comprising a first top face extending between the upstream face, the downstream face, and the front face to the inner surface and a second top face, spaced from the first top face, the second top face extending between the upstream face, the downstream face, and the front face to the inner surface, wherein the upstream face is curved between the first top face and the second top face to define the turbulator nose.

The turbine engine of any preceding clause, wherein the airfoil is a blade located in the engine core.

A turbine engine, comprising an engine core extending along an engine centerline and including a compressor section, and a turbine section in serial flow arrangement; an engine component having an internal cooling passage defined by an inner surface, the inner surface having a first portion and a second portion; and a turbulator, having a chevron shape, located within the internal cooling passage and extending from the first portion of the inner surface into the internal cooling passage, the turbulator comprising: a front face spaced from the first portion and the second portion; an upstream face extending between the front face and the inner surface; a downstream face extending between the front face and the inner surface opposite the upstream face; and a turbulator nose defined by a portion of the upstream face, wherein the turbulator nose includes a turbulator nose radius having a radius of curvature greater than zero.

The turbine engine of any preceding clause, wherein the turbulator further comprises an upstream draft angle measured between the upstream face and a first line, wherein the first line extends through an intersection of the upstream face and the front face of the turbulator and is perpendicular to a first extension line extending perpendicularly from the first portion and passing through the intersection of the upstream face and the front face of the turbulator.

The turbine engine of any preceding clause, wherein the upstream draft angle is in a range from 45° to 135°, inclusive of endpoints.

The turbine engine of any preceding clause, wherein the turbulator further comprises an downstream draft angle measured between the downstream face and a second line, wherein the second line extends through an intersection of the downstream face and the front face of the turbulator and is perpendicular to a second extension line extending perpendicularly from the first portion and passing through the intersection of the downstream face and the front face of the turbulator.

The turbine engine of any preceding clause, wherein the downstream draft angle is in a range from 45° to 135°, inclusive of endpoints.

The turbine engine of any preceding clause, wherein the upstream draft angle is in a range from 45° to less than 90°.

The turbine engine of any preceding clause, wherein the turbulator further comprises a downstream draft angle measured between the downstream face and a second line, wherein the second line extends through an intersection of the downstream face and the front face of the turbulator and is perpendicular to a second extension line extending perpendicularly from the first portion and passing through the intersection of the downstream face and the front face of the turbulator.

The turbine engine of any preceding clause, wherein the downstream draft angle is in a range from 45° to 135°.

The turbine engine of any preceding clause, wherein the downstream draft angle is in a range from greater than 90° to 135°.

The turbine engine of any preceding clause, further comprising a turbulator length defined as a distance measured from a first intersection to a second intersection of a second top face, the upstream face, and the first portion of the inner surface, wherein a ratio of the turbulator length to a cavity width is greater than zero and less than or equal to 1:1.3333.

The turbine engine of any preceding clause, wherein the engine component is an airfoil extending from a root to a tip.

The turbine engine of any preceding clause, further comprising a second turbulator extending from the second portion of the inner surface.

The turbine engine of any preceding clause, further comprising a third turbulator extending from the first portion of the inner surface.

The turbine engine of any preceding clause, further comprising a first top face extending between the upstream face, the downstream face, and the front face to the inner surface and a second top face, spaced from the first top face, the second top face extending between the upstream face, the downstream face, and the front face to the inner surface, wherein the upstream face is curved between the first top face and the second top face to define the turbulator nose.

The turbine engine of any preceding clause, further comprising a turbulator length defined as a distance measured from a first intersection to a second intersection of a second top face, the upstream face, and the first portion of the inner surface, wherein a ratio of the turbulator length to a cavity width is greater than zero and less than or equal to 1:1.3333.

A turbine engine comprising: an engine core extending along an engine centerline and including a compressor section and a turbine section in serial flow arrangement; an airfoil having an internal cooling passage defined by an inner surface, the inner surface having a first portion and a second portion; and a turbulator located within the internal cooling passage and extending from the first portion of the inner surface into the internal cooling passage, the turbulator comprising: a front face spaced from the first portion and the second portion; an upstream face extending between the front face and the inner surface; a downstream face extending between the front face and the inner surface opposite the upstream face; a turbulator nose located at a most upstream curved portion on the upstream face of the turbulator; a cavity width (A) is defined as a distance measured across the internal cooling passage between portions of the inner surface that extend through an interior of the airfoil between a first side and a second side, wherein the cavity width is measured in a chordwise direction defined by a camber line in a reference plane defined with respect to the turbulator nose; a cavity height (B) is defined as a distance measured across the internal cooling passage defined by the inner surface between the first portion of the inner surface to the second portion of the inner surface, wherein the cavity height is measured along a line intersecting the turbulator nose and perpendicular to the chordwise direction in a reference plane defined with respect to the turbulator nose; a cavity aspect ratio (C) is defined as a ratio of the cavity height to the cavity width, wherein the cavity aspect ratio is in a range from 0.1 to 10, inclusive of endpoints; a turbulator nose radius is defined as a radius of curvature of a turbulator nose measured along the upstream face, wherein the radius of curvature is in a range from 0.0127 centimeters to 1.905 centimeters (0.005 inches to 0.75 inches), inclusive of endpoints; and a turbulator height is defined as a greatest distance measured perpendicular to the first portion of the inner surface to the front face of the turbulator, wherein the turbulator height is in a range from 0.0127 centimeters to 0.1524 centimeters (0.005 inches to 0.06 inches), inclusive of endpoints; wherein the cavity aspect ratio (C).

The turbine engine of any preceding clause, wherein the turbulator nose radius (R), and the turbulator height (e), define a first value *(EQ1)* by the following expression: $EQ 1 = \left(\frac{1}{C}\right) \left(\frac{R}{e}\right)$, and wherein the first value *(EQ1)* is in a range from 0.00833 to 1500, inclusive of endpoints.

The turbine engine of any preceding clause, wherein the turbulator further comprises an upstream draft angle measured internally between the upstream face and the first portion of the inner surface of the internal cooling passage where the turbulator is positioned.

The turbine engine of any preceding clause, wherein the upstream draft angle is in a range from 45° to 135°, inclusive of endpoints.

The turbine engine of any preceding clause, wherein the turbulator further comprises a downstream draft angle measured between the downstream face and the first portion of the inner surface of the internal cooling passage where the turbulator is positioned.

The turbine engine any preceding clause, wherein the downstream draft angle is in a range from 45° to 135°, inclusive of endpoints.

The turbine engine of any preceding clause, wherein the upstream draft angle is in a range from 45° to less than 90°.

The turbine engine of any preceding clause, wherein the turbulator further comprises a downstream draft angle measured between the downstream face and the first portion of the inner surface of the internal cooling passage where the turbulator is positioned.

The turbine engine of any preceding clause, wherein the downstream draft angle is in a range from 45° to 135°.

The turbine engine of any preceding clause, wherein the downstream draft angle is in a range from greater than 90° to 135°.

The turbine engine of any preceding clause, further comprising a turbulator length defined as a distance measured from a first intersection to a second intersection of a second top face, the upstream face, and the first portion of the inner surface, wherein a ratio of the turbulator length to the cavity width is greater than zero and less than or equal to 1:1.3333.

The turbine engine of any preceding clause, wherein the airfoil is a blade located in the engine core.

The turbine engine of any preceding clause, further comprising a second turbulator extending from the second portion of the inner surface.

The turbine engine of any preceding clause, further comprising a third turbulator extending from the first portion of the inner surface.

The turbine engine of any preceding clause, further comprising a first top face extending between the upstream face, the downstream face, and the front face to the inner surface and a second top face, spaced from the first top face, the second top face extending between the upstream face, the downstream face, and the front face to the inner surface, wherein the downstream face is curved between the first top face and the second top face to define the turbulator nose.

The turbine engine of any preceding clause, further comprising a turbulator length defined as a distance measured from a first intersection to a second intersection of a second top face, the upstream face, and the first portion of the inner surface, wherein a ratio of the turbulator length to the cavity width is greater than zero and less than or equal to 1:1.3333.

The turbine engine of any preceding clause, further comprising: an upstream draft angle (α₁) measured between the upstream face and the first portion of the inner surface of the internal cooling passage where the turbulator is positioned, and wherein the upstream draft angle is in a range from 45° to 135°, inclusive of endpoints; and a downstream draft angle (α₂) measured between the downstream face and the first portion of the inner surface of the internal cooling passage where the turbulator is positioned, and wherein the downstream draft angle is in a range from 45° to 135°, inclusive of endpoints; wherein the cavity aspect ratio (C), the turbulator nose radius (*R*), the turbulator height *(e),* the upstream draft angle (α₁), and the downstream draft angle (α₂) define a second value *(EQ2)* by the following expression: $EQ 2 = \left(\frac{1}{C}\right) \left(\frac{R}{e}\right) \left(\frac{{∝}_{1}}{45 °}\right) \left(\frac{{∝}_{2}}{45 °}\right)$, and wherein the second value *(EQ2)* is between 0.008333 and 13500, inclusive of endpoints.

The turbine engine of any preceding clause, further comprising a turbulator length defined as a distance measured from a first intersection to a second intersection of a second top face, the upstream face, and the first portion of the inner surface, wherein a ratio of the turbulator length to the cavity width is greater than zero and less than or equal to 1:1.3333.

The turbine engine of any preceding clause, further comprising a second turbulator extending from the second portion of the inner surface.

The turbine engine of any preceding clause, further comprising a first top face extending between the upstream face, the downstream face, and the front face to the inner surface and a second top face, spaced from the first top face, the second top face extending between the upstream face, the downstream face, and the front face to the inner surface, wherein the upstream face is curved between the first top face and the second top face to define the turbulator nose.

The turbine engine of any preceding clause, wherein the airfoil is a blade located in the engine core.

A turbine engine comprising: an engine core extending along an engine centerline and including a compressor section and a turbine section in serial flow arrangement; an airfoil having an internal cooling passage defined by an inner surface, the inner surface having a first portion and a second portion; and a turbulator located within the internal cooling passage and extending from the first portion of the inner surface into the internal cooling passage, the turbulator comprising: a front face spaced from the first portion and the second portion; an upstream face extending between the front face and the inner surface; a downstream face extending between the front face and the inner surface opposite the upstream face; a turbulator nose located at a most upstream curved portion on the upstream face of the turbulator; a cavity width (A) is defined as a distance measured across the internal cooling passage between portions of the inner surface that extend through an interior of the airfoil between a first side and a second side, wherein the cavity width is measured in a chordwise direction defined by a camber line in a reference plane defined with respect to the turbulator nose; a cavity height (B) is defined as a distance measured across the internal cooling passage defined by the inner surface between the first portion of the inner surface to the second portion of the inner surface, wherein the cavity height is measured along a line intersecting the turbulator nose and perpendicular to the chordwise direction in a reference plane defined with respect to the turbulator nose; a cavity aspect ratio (C) is defined as a ratio of the cavity height to the cavity width, wherein the cavity aspect ratio is in a range from 0.1 to 10, inclusive of endpoints; a turbulator nose radius is defined as a radius of curvature of a turbulator nose measured along the upstream face, wherein the radius of curvature is in a range from 0.0127 centimeters to 1.905 centimeters (0.005 inches to 0.75 inches), inclusive of endpoints; and a turbulator height is defined as a greatest distance measured perpendicular to the first portion of the inner surface to the front face of the turbulator, wherein the turbulator height is in a range from 0.0127 centimeters to 0.1524 centimeters (0.005 inches to 0.06 inches), inclusive of endpoints.

The turbine engine of any preceding clause, wherein the cavity aspect ratio (C), the turbulator nose radius (R), and the turbulator height (e), define a first value (EQ1) by the following expression: $EQ 1 = \left(\frac{1}{C}\right) \left(\frac{R}{e}\right)$, and wherein the first value (EQ1) is in a range from 0.00833 to 1500, inclusive of endpoints.

The turbine engine of any preceding clause, wherein the turbulator further comprises an upstream draft angle measured internally from the upstream face to the first portion of the inner surface of the internal cooling passage where the turbulator is positioned, wherein the upstream draft angle is in a range from 45° to 135°, inclusive of endpoints.

The turbine engine of any preceding clause, wherein the turbulator further comprises an downstream draft angle measured from the downstream face to the first portion of the inner surface of the internal cooling passage where the turbulator is positioned, wherein the downstream draft angle is in a range from 45° to 135°, inclusive of endpoints.

The turbine engine of any preceding clause, wherein the upstream draft angle is in a range from 45° to less than 90°.

The turbine engine of any preceding clause, wherein the turbulator further comprises a downstream draft angle measured from the downstream face to the first portion of the inner surface of the internal cooling passage where the turbulator is positioned.

The turbine engine of any preceding clause, wherein the downstream draft angle is in a range from 45° to 135°.

The turbine engine of any preceding clause, wherein the downstream draft angle is in a range from greater than 90° to 135°.

The turbine engine of any preceding clause, further comprising a turbulator length defined as a distance measured from a first intersection to a second intersection of a second top face, the upstream face, and the first portion of the inner surface, wherein a ratio of the turbulator length to the cavity width is greater than zero and less than or equal to 1:1.3333.

The turbine engine of any preceding clause, wherein 0.083 ≤ R/e ≤ 150.

The turbine engine of any preceding clause, wherein the airfoil is a blade located in the engine core.

The turbine engine of any preceding clause, further comprising a second turbulator extending from the second portion of the inner surface.

The turbine engine of any preceding clause, further comprising a third turbulator extending from the first portion of the inner surface.

The turbine engine of any preceding clause, further comprising a first top face extending between the upstream face, the downstream face, and the front face to the inner surface and a second top face, spaced from the first top face, the second top face extending between the upstream face, the downstream face, and the front face to the inner surface, wherein the downstream face is curved between the first top face and the second top face to define the turbulator nose.

The turbine engine of any preceding clause, further comprising a turbulator length defined as a distance measured from a first intersection to a second intersection of a second top face, the upstream face, and the first portion of the inner surface, wherein a ratio of the turbulator length to the cavity width is greater than zero and less than or equal to 1:1.3333.

The turbine engine of any preceding clause, further comprising: an upstream draft angle (α₁) measured from the upstream face to the first portion of the inner surface of the internal cooling passage where the turbulator is positioned, and wherein the upstream draft angle is in a range from 45° to 135°, inclusive of endpoints; andan downstream draft angle (α₂) measured from the downstream face to the first portion of the inner surface of the internal cooling passage where the turbulator is positioned, and wherein the downstream draft angle is in a range from 45° to 135°, inclusive of endpoints; wherein the cavity aspect ratio (C), the turbulator nose radius (R), the turbulator height (e), the upstream draft angle (α₁), and the downstream draft angle (α₂) define a second value (EQ2) by the following expression: $EQ 2 = \left(\frac{1}{C}\right) \left(\frac{R}{e}\right) \left(\frac{{∝}_{1}}{45 °}\right) \left(\frac{{∝}_{2}}{45 °}\right)$, and wherein the second value (EQ2) is between 0.008333 and 13500, inclusive of endpoints.

The turbine engine of any preceding clause, further comprising a turbulator length defined as a distance measured from a first intersection to a second intersection of a second top face, the upstream face, and the first portion of the inner surface, wherein a ratio of the turbulator length to the cavity width is greater than zero and less than or equal to 1:1.3333.

The turbine engine of any preceding clause, further comprising a second turbulator extending from the second portion of the inner surface.

The turbine engine of any preceding clause, further comprising a first top face extending between the upstream face, the downstream face, and the front face to the inner surface and a second top face, spaced from the first top face, the second top face extending between the upstream face, the downstream face, and the front face to the inner surface, wherein the upstream face is curved between the first top face and the second top face to define the turbulator nose.

The turbine engine of any preceding clause, wherein the airfoil is a blade located in the engine core.

To the extent one or more structures provided herein can be known in the art, it should be appreciated that the present disclosure can include combinations of structures not previously known to combine, at least for reasons based in part on conflicting benefits versus losses, desired modes of operation, or other forms of teaching away in the art.

This written description uses examples to disclose the present disclosure, including the best mode, and also to enable any person skilled in the art to practice the disclosure, including making and using any devices or systems and performing any incorporated methods. The patentable scope of the disclosure is defined by the claims, and can include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A turbine engine comprising:
an engine core extending along an engine centerline and including a compressor section and a turbine section in serial flow arrangement;
an airfoil having an internal cooling passage defined by an inner surface, the inner surface having a first portion and a second portion; and
a turbulator located within the internal cooling passage and extending from the first portion of the inner surface into the internal cooling passage, the turbulator comprising:
a front face spaced from the first portion and the second portion;
an upstream face extending between the front face and the inner surface;
a downstream face extending between the front face and the inner surface opposite the upstream face;
a turbulator nose located at a most upstream curved portion on the upstream face of the turbulator;
a cavity width (A) is defined as a distance measured across the internal cooling passage between portions of the inner surface that extend through an interior of the airfoil between a first side and a second side, wherein the cavity width is measured in a chordwise direction defined by a camber line in a reference plane defined with respect to the turbulator nose;
a cavity height (B) is defined as a distance measured across the internal cooling passage defined by the inner surface between the first portion of the inner surface to the second portion of the inner surface, wherein the cavity height is measured along a line intersecting the turbulator nose and perpendicular to the chordwise direction in a reference plane defined with respect to the turbulator nose;
a cavity aspect ratio (C) is defined as a ratio of the cavity height to the cavity width, wherein the cavity aspect ratio is in a range from 0.1 to 10, inclusive of endpoints;
a turbulator nose radius is defined as a radius of curvature of a turbulator nose measured along the upstream face, wherein the radius of curvature is in a range from 0.0127 centimeters to 1.905 centimeters (0.005 inches to 0.75 inches), inclusive of endpoints; and
a turbulator height is defined as a greatest distance measured perpendicular to the first portion of the inner surface to the front face of the turbulator, wherein the turbulator height is in a range from 0.0127 centimeters to 0.1524 centimeters (0.005 inches to 0.06 inches), inclusive of endpoints.

2. The turbine engine of claim 1, wherein the cavity aspect ratio (C), the turbulator nose radius (R), and the turbulator height (e), define a first value *(EQ1)* by the following expression: $EQ 1 = \left(\frac{1}{C}\right) \left(\frac{R}{e}\right) ,$ and wherein the first value *(EQ1)* is in a range from 0.00833 to 1500, inclusive of endpoints.

3. The turbine engine of ant preceding claim, wherein the turbulator further comprises an upstream draft angle measured internally from the upstream face to the first portion of the inner surface of the internal cooling passage where the turbulator is positioned, wherein the upstream draft angle is in a range from 45° to 135°, inclusive of endpoints.

4. The turbine engine of claim 3, wherein the turbulator further comprises a downstream draft angle measured from the downstream face to the first portion of the inner surface of the internal cooling passage where the turbulator is positioned, wherein the downstream draft angle is in a range from 45° to 135°, inclusive of endpoints.

5. The turbine engine of any of claims 3-4, wherein the upstream draft angle is in a range from 45° to less than 90°.

6. The turbine engine of any preceding claim, wherein the turbulator further comprises a downstream draft angle measured from the downstream face to the first portion of the inner surface of the internal cooling passage where the turbulator is positioned.

7. The turbine engine of claim 6, wherein the downstream draft angle is in a range from 45° to 135°.

8. The turbine engine of claim 6, wherein the downstream draft angle is in a range from greater than 90° to 135°.

9. The turbine engine of claim 8, further comprising a turbulator length defined as a distance measured from a first intersection to a second intersection of a second top face, the upstream face, and the first portion of the inner surface, wherein a ratio of the turbulator length to the cavity width is greater than zero and less than or equal to 1:1.3333.

10. The turbine engine of any preceding claim, wherein 0.083 ≤ R/e ≤ 150.

11. The turbine engine of any preceding claim, further comprising a first top face extending between the upstream face, the downstream face, and the front face to the inner surface and a second top face, spaced from the first top face, the second top face extending between the upstream face, the downstream face, and the front face to the inner surface, wherein the downstream face is curved between the first top face and the second top face to define the turbulator nose.

12. The turbine engine of any preceding claim, further comprising a turbulator length defined as a distance measured from a first intersection to a second intersection of a second top face, the upstream face, and the first portion of the inner surface, wherein a ratio of the turbulator length to the cavity width is greater than zero and less than or equal to 1:1.3333.

13. The turbine engine of any preceding claim, further comprising:
an upstream draft angle (α₁) measured from the upstream face to the first portion of the inner surface of the internal cooling passage where the turbulator is positioned, and wherein the upstream draft angle is in a range from 45° to 135°, inclusive of endpoints; and
an downstream draft angle (α₂) measured from the downstream face to the first portion of the inner surface of the internal cooling passage where the turbulator is positioned, and wherein the downstream draft angle is in a range from 45° to 135°, inclusive of endpoints;
wherein the cavity aspect ratio (C), the turbulator nose radius (R), the turbulator height (e), the upstream draft angle (α₁), and the downstream draft angle (α₂) define a second value *(EQ2)* by the following expression: $EQ 2 = \left(\frac{1}{C}\right) \left(\frac{R}{e}\right) \left(\frac{{∝}_{1}}{45 °}\right) \left(\frac{{∝}_{2}}{45 °}\right) ,$ and
wherein the second value *(EQ2)* is between 0.008333 and 13500, inclusive of endpoints.

14. The turbine engine of claim 13, further comprising a turbulator length defined as a distance measured from a first intersection to a second intersection of a second top face, the upstream face, and the first portion of the inner surface, wherein a ratio of the turbulator length to the cavity width is greater than zero and less than or equal to 1:1.3333.

15. The turbine engine of any of claims 13-14, further comprising a first top face extending between the upstream face, the downstream face, and the front face to the inner surface and a second top face, spaced from the first top face, the second top face extending between the upstream face, the downstream face, and the front face to the inner surface, wherein the upstream face is curved between the first top face and the second top face to define the turbulator nose.
